(19) Europäisches Patentamt

European Patent Office

Office européen des brevets

(11) **EP 4 216 078 A1**

(12) **EUROPEAN PATENT APPLICATION**

(43) Date of publication:
**26.07.2023 Bulletin 2023/30**

(21) Application number: **22201063.9**

(22) Date of filing: **12.10.2022**

(51) International Patent Classification (IPC):
**G06F 16/93** *(2019.01)* **G06F 16/33** *(2019.01)*

(52) Cooperative Patent Classification (CPC):
**G06F 16/93; G06F 16/3331**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.01.2022 JP 2022008494**

(71) Applicant: **FUJITSU LIMITED**
**Kawasaki-shi, Kanagawa 211-8588 (JP)**

(72) Inventors:
• **Chen, Bin**
**Kawasaki-shi, Kanagawa, 211-8588 (JP)**
• **Okabayashi, Keiju**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **METHOD OF RETRIEVING DATA AND DATA RETRIEVAL PROGRAM**

(57) A method of retrieving data is executed by a server that causes a plurality of information processing terminals to display a shared screen in which a plurality of cards are arranged and includes accepting a retrieval condition for the cards from a first information processing terminal, retrieving cards that match the retrieval condition, determining a display order of the cards that match the retrieval condition in accordance with a number of times of operation, and causing the first information processing terminal to display the cards that match the retrieval condition based on the determined display order.

## FIG. 1

EP 4 216 078 A1

**Description**

FIELD

The embodiments discussed herein are related to a method of retrieving data and a computer-readable recording medium storing a data retrieval program.

BACKGROUND

A method of retrieving desired data from a set of predetermined texts is known. For example, a method of optimizing retrieval results in a vector retrieval has been presented. According to this method, the following procedure has been disclosed: a retrieval tuning process is performed in a case where, as a result of determining whether the retrieval result is good or bad, a retrieval result is bad; and, by searching the cause of the bad result, it has been determined that appropriate weighting is not performed.

There has been presented a method of retrieving an example text from a set of texts. According to this method, the following has been disclosed: an input query text is received; candidate example texts for the input query text are selected from a set of texts by using the term frequency-inverse document frequency (TF-IDF) method; and next, the selected candidate example texts are re-ranked based on a weighted edit distance between the selected candidate example texts and the input query text.

Japanese Laid-open Patent Publication Nos. 2004-206631 and 2004-62893 are disclosed as related art.

In a system in which a plurality of users display cards on screens of respective terminals and perform a remote conference, presentation and discussion are performed by using diagrams and tables displayed in the cards. The cards used in the conference may be stored in a cloud computer or the like and reused.

In a case where a desired document is retrieved from a set of cards, when the TF-IDF method is used, the cards are displayed in descending order of the degree of matching with the retrieval condition. However, this method of retrieving only focuses on the degree of matching of words included in the cards. Thus, a situation during the conference such as a situation in which discussion becomes active during the remote conference and a card that receives attention is given a priority in displayed is not reflected. Accordingly, in some cases, a displayed document does not match the intention of the user.

Accordingly, in one aspect, the present disclosure provides prioritized display of a card with which discussion becomes active in a conference.

In the one aspect, according to the present disclosure, a card with which discussion becomes active in a conference may be given a priority in display.

SUMMARY

According to an aspect of the embodiments, a method of retrieving data is executed by a server that causes a plurality of information processing terminals to display a shared screen in which a plurality of cards are arranged and includes accepting a retrieval condition for the cards from a first information processing terminal, retrieving cards that match the retrieval condition, determining a display order of the cards that match the retrieval condition in accordance with a number of times of operation, and causing the first information processing terminal to display the cards that match the retrieval condition based on the determined display order.

BRIEF DESCRIPTION OF DRAWINGS

FIG. 1 is a system configuration diagram illustrating an example of an information processing system;
FIG. 2 is a diagram illustrating an overview of the information processing system;
FIG. 3 is a functional configuration diagram illustrating an example of an information processing terminal;
FIG. 4 is a functional configuration diagram illustrating an example of a server;
FIG. 5 is a flowchart illustrating an example of an accumulation process of the number of times of operation on the card according to a first embodiment;
FIG. 6 is a flowchart illustrating an example of a retrieval process according to the first embodiment;
FIGs. 7A and 7B are diagrams illustrating an example of a retrieval result according to the first embodiment;
FIGs. 8A to 8C are diagrams explaining the degree of attention of a word;
FIGs. 9A and 9B are a diagram explaining the degree of activity of a card;
FIG. 10 is a flowchart illustrating an example of an accumulation process of the degree of activity of the card and the degree of attention of the word according to a second embodiment;

FIG. 11 is a diagram illustrating an example of a position/size table;
FIG. 12 is a diagram illustrating an example of a card data table;
FIGs. 13A and 13B are a flowchart illustrating an example of a TF correction process according to the second embodiment;
FIGs. 14A to 14C are a diagram explaining effects of the TF correction process according to the second embodiment;
FIG. 15 is a flowchart illustrating an example of an IDF correction process according to the second embodiment;
FIG. 16 is a diagram illustrating an example of a dictionary table;
FIGs. 17A to 17D are a diagram explaining effects of the IDF correction process according to the second embodiment;
FIG. 18 is a flowchart illustrating an example of a retrieval process according to the second embodiment;
FIGs. 19A and 19B are diagrams illustrating an example of the retrieval result according to the second embodiment; and
FIG. 20 is a hardware configuration diagram illustrating an example of the information processing terminal.

## DESCRIPTION OF EMBODIMENTS

Hereinafter, an embodiment will be described with reference to the accompanying drawings. In the present specification and drawings, elements having substantially the same functional configurations are denoted by the same reference signs and the redundant description thereof is omitted.

[System Configuration and Overview]

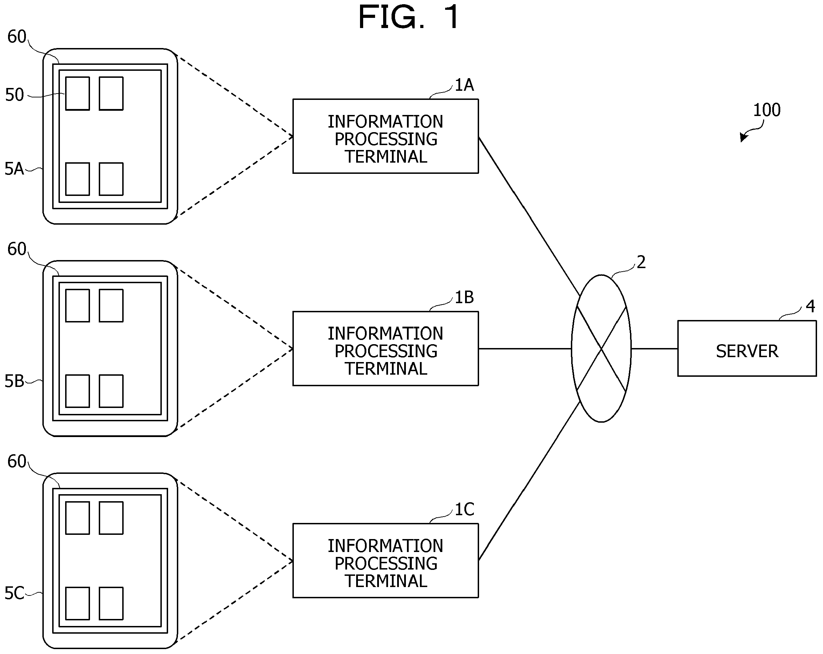

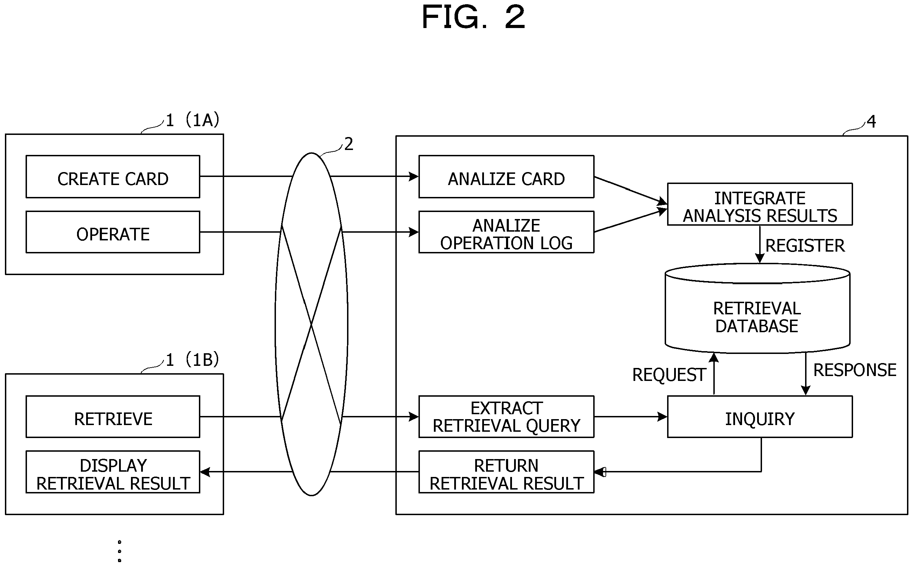

FIG. 1 is a system configuration diagram illustrating an example of an information processing system 100 according to the embodiment. FIG. 2 is a diagram illustrating an overview of the information processing system 100. The information processing system 100 includes information processing terminals 1A, 1B, and 1C and a server 4. The information processing terminals 1A, 1B, 1C and the server 4 are coupled to each other via a network 2. The server 4 provides a service for assisting in presentation and discussion by displaying a shared screen in which a plurality of digital cards are arranged in a plurality of information processing terminals in a remote conference in which a plurality of users participate. Screens 60 are displayed, by using a browser, in displays 5A to 5C of the information processing terminals 1A to 1C used by the users participating in the conference. In so doing, in the information processing terminals 1A to 1C, when an application that enables displaying in a card format (hereinafter, referred to as a "card application") is started up, the card application provides display of digital cards (hereinafter, referred to as a "cards 50") in the screens 60 by using the browser.

The information processing system 100 is mainly used for presentation and discussion of problems using drawings and tables in a conference such as a remote meeting or brainstorming between many users. Before the conference, a material (document) is prepared in the format of a card 50 and uploaded to and arranged in the screens 60 in advance, so that the conference may be efficiently progressed. The card 50 may include a plurality of pages that may be listed. Turning of pages may be performed by using a forward button or the like.

The card application assists in creation of a new card 50, a change in a display position of the card 50, a change in a display size (scale-up or scale-down) of the card 50, rotation of the card 50, and the like. The number of the information processing terminals 1A, 1B, and 1C is not limited to three and may be any number, and the information processing terminals 1A, 1B, and 1C are also collectively referred to as information processing terminals 1. The displays 5A, 5B, and 5C are also collectively referred to as displays 5. An information processing terminal that transmits a retrieval condition of the card to the server 4 and makes a retrieval request in the following description is an example of a "first information processing terminal".

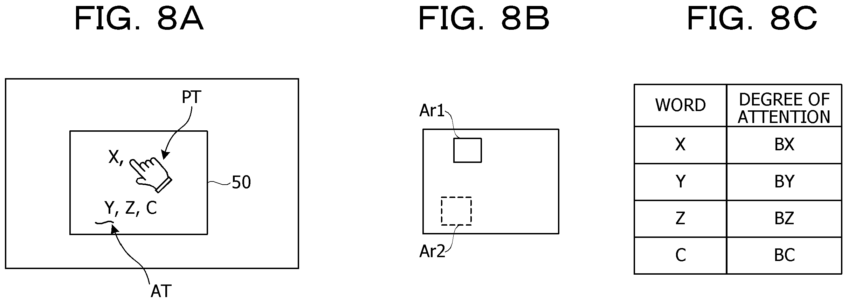

The card 50 is a display component that displays a card for text, handwritten characters, images, photographs, an optical character reader (OCR) document, a PDF document, a JPEG document, and the like created by the user (see FIG. 8A). During a conference, the information processing terminals 1 synchronize with each other and share the screen with each other via the server 4 so that a plurality of users participating in the conference may watch the same screen.

When the information processing terminals 1A to 1C start up an application that enables pointing and annotation of an explanatory part (hereinafter referred to as a "pointer application"), the pointer application provides a display indicating a pointing position and an annotation position by using a mouse. The user may perform operation by using a user-interface (UI) examples of which are not limited to the mouse but also include a keyboard, an electronic pen, and the like. The pointer application displays a pointing operation such as pointing to a word that is an explanatory part in the card 50 in accordance with a user operation using an electronic pen or the like. The pointer application displays an annotation operation such as drawing a line or writing a comment on the card 50 in accordance with the user operation using an electronic pen or the like.

The information processing terminals 1A to 1C store in a card operation table user operation data related to the card 50 performed in each terminal. The user operation data may include types of the pointing operation and the annotation operation, the pointing position, and the annotation position. The information processing terminals 1A to 1C store in a card data table or position/size table card data of the card 50 performed in each terminal. Examples of the card data may include ID information of the card 50, word information included in the card 50, information on the display position, the display size, the rotation of the card 50, and the like.

Information on the card operation table, card data table, and position/size table may be transmitted from each of the information processing terminals 1A to 1C to the server 4 and synchronized so as to be stored in a retrieval database in the server 4. These tables are stored in the retrieval database of the server 4 for each piece of identification information of the conference. These tables may be stored in a storage area of a cloud storage computer or the like. A document such as a PDF document may be stored after being converted into a text document by a converter.

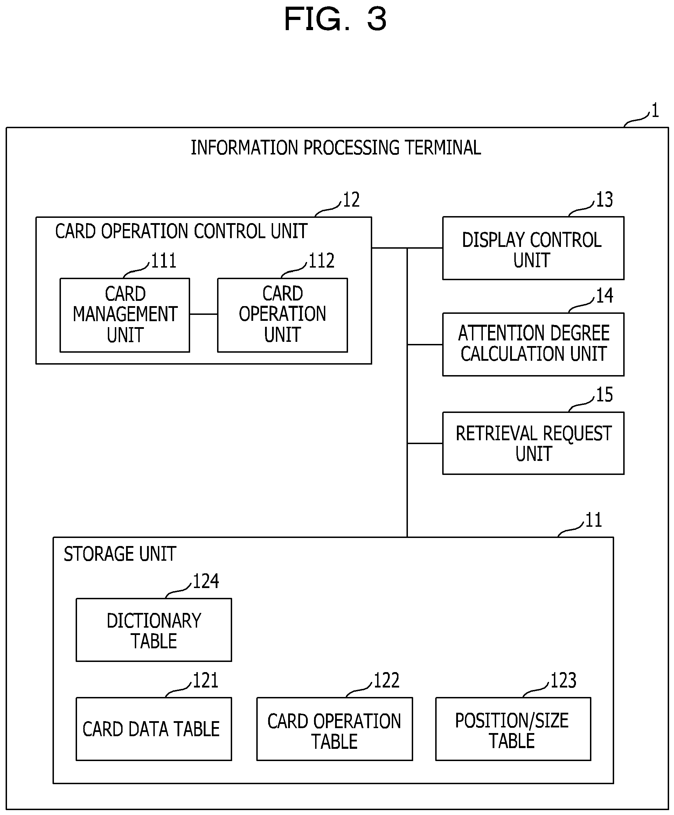

FIG. 2 illustrates an overview of entire processing performed in the information processing system 100. The information processing terminal 1 (the information processing terminal 1A in an example illustrated in FIG. 2) creates the card 50 in accordance with the user operation and adds the card data of the card 50 to a card data table 121 (see FIG. 3). The information processing terminal 1A also adds to a card operation table 122 (see FIG. 3) for the pointing operation, the annotation operation, and the like. These pieces of data are associated with the identification information of the conference and stored.

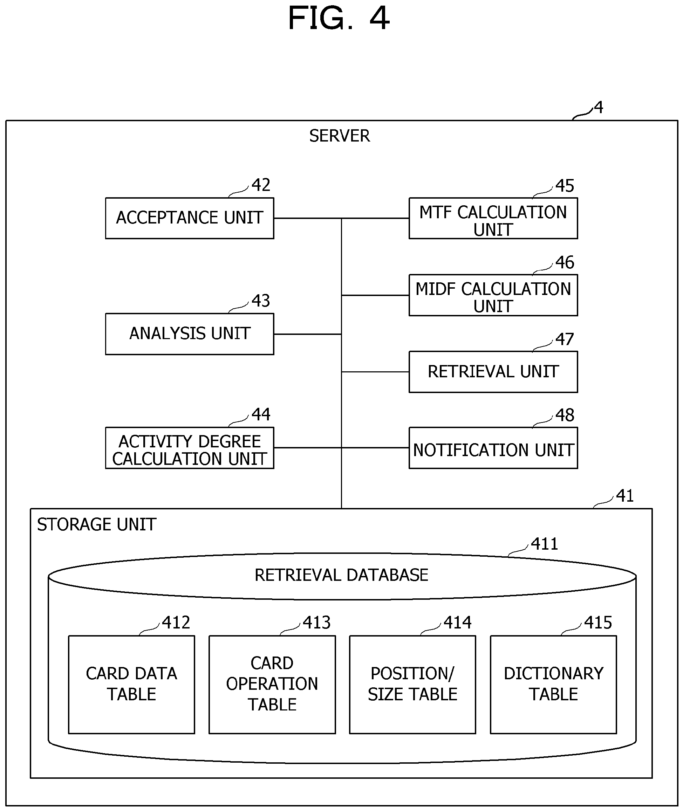

In a case where the card 50 is added, the information processing terminal 1 notifies the server 4 of the addition of the card 50. In a case where the card 50 is added to the screen 60, the information processing terminal 1 also transmits to the server 4 the identification information of the conference to which the card 50 is added. In a case where the card 50 is deleted, the information processing terminal 1 notifies the server 4 of the deletion of the card 50. In a case where the card 50 is deleted from the screen 60, the information processing terminal 1 also transmits to the server 4 the identification information of the conference from which the card 50 is deleted. In a case where the card 50 is changed, the information processing terminal 1 notifies the server 4 of the content of the change in the card 50. Card data related to creation, addition, deletion, and change of the card 50 is stored in card data tables 121 and 412 of each of the information processing terminals 1 and the server 4 (see FIGs. 3 and 4). The information processing terminal 1A may transmit the user operation data of the pointing operation, the annotation operation, and the like to the server 4. The server 4 may store the user operation data in a card operation table 413 (see FIG. 4). However, in a case where the degree of attention of a word, which will be described later, is calculated in the information processing terminal 1 and is not calculated in the server 4, the server 4 does not necessarily include the card operation table 413.

The server 4 analyzes the received card 50 and operation events (operation log information) on the card 50. The analyses of the card 50 and the operation are performed based on the card 50 used on a conference-by-conference basis. In the analysis of the card 50, how many words (referred to as words X) to be retrieved are included in the card 50 is checked. In the analyses of the operation, types, operation positions, and the like of operation events such as annotation, pointing, scale-up, scale-down, and rotation may be analyzed. The server 4 integrates the analysis results and registers the integrated analysis results in a retrieval database 411 (see FIG. 4).

When looking back the content of the conference after the conference, the user may retrieve the card 50 and check the content. When the user of the information processing terminal 1 (information processing terminal 1B in the example illustrated in FIG. 2) inputs a retrieval keyword to a retrieval field in the screen 60, the server 4 extracts a retrieval query in which a retrieval condition is described and makes an inquiry to a retrieval engine of the retrieval database 411. In the retrieval query, data inquiries, requests, and the like for the retrieval engine are represented by character strings in a certain format. In response to the inquiry, the retrieval engine refers to the retrieval database 411, extracts the card 50 satisfying the condition of the retrieval keyword (word) corresponding to the retrieval query, and responds.

When there is a response, the server 4 returns the retrieval result of the extracted card 50 to the information processing terminal 1B. A list of the cards 50 matching the retrieval condition is sorted and displayed in the display 5B of the information processing terminal 1B by using a browser.

The cards 50 satisfying the condition of the retrieval keyword (word) are extracted in a single operation of a retrieval, and the degree of matching with the retrieval query is calculated by using a term frequency-inverse document frequency (TF-IDF) method for the extracted cards 50 and turned the results into scores. The degree of matching is turned into scores for each card 50 based on the appearance frequency of the retrieval keyword (word) and the universality of the retrieval keyword itself. Based on the calculation result, the cards 50 are sorted in descending order of the scores (degrees of matching), and the list of the cards 50 is displayed in the sorted order. The term frequency (TF) and the inverse document frequency (IDF) in the TF-IDF method are represented by Expression (1) and Expression (2), respectively.

$$TF = \frac{Appearance\ frequency\ of\ word\ X\ in\ document\ A}{Sum\ of\ appearance\ frequencies\ of\ all\ words\ in\ document\ A}$$

... (1)

Expression (1) is an expression for calculating the TF, for example, the appearance frequency of a word. A single card 50 is regarded as a single document in Expressions (1) and (2). In Expression (1), the appearance frequency of the word X in the single document A is counted, and the count number with respect to the sum of the appearance frequencies of all words in the document A is set as TF.

$$IDF = \log\left(\frac{Total\ number\ of\ documents}{Number\ of\ documents\ including\ word\ X}\right)$$

... (2)

Expression (2) is an IDF, for example, an expression that calculates a high value when a word is "rare" and calculates a low value when a word "frequently appears in various documents". In Expression (2), the total number of documents (total number of cards) with respect to the number of documents including the word X (the number of cards 50 including the word X) is referred to as the IDF.

When the TF-IDF method is used, attention is focused only on matching with the word included in the cards 50. Thus, the cards 50 having a high degree of matching with the retrieval keyword (word) are displayed at higher positions. Accordingly, the cards 50 that have been actively discussed in a discussion scene of a remote conference or the like or the cards 50 that have been frequently referred to in a presentation are not necessarily displayed at higher positions as a result of the sorting. Thus, in some cases, the sorting result does not necessarily match the user's intention.

Originally, it is important to present a result of retrieval based on the TF-IDF method as described above to the user. However, from an other viewpoint, it is similarly desired for the user and important to extract a retrieval result such that the card actively discussed during the conference comes to the top or a higher position of the list of the cards 50 matching the retrieval keyword and present the retrieval result to the user.

Thus, with the information processing system 100 according to the present embodiment, when a remote conference is held, a level of importance of the cards 50 and the words are adjusted in consideration of the cards 50 actively discussed during the conference based on the user operation during the discussion or a presentation. Examples of the user operation include operation on the card 50 (for example, annotation and pointing) and operation on the external display of the card (for example, movement to the center of the screen, scale-up/down, and rotation). According to the first embodiment, the retrieval condition for the cards 50 is accepted from the first information processing terminal, and the cards 50 that match the retrieval condition are retrieved. In addition, a method is provided in which the display order of the cards 50 matching the retrieval condition is determined in accordance with the number of times of the operation, and the cards matching the retrieval condition are displayed in the first information processing terminal based on the determined display order.

<First Embodiment

[Functional Configuration of Information Processing Terminal]

FIG. 3 is a functional configuration diagram illustrating an example of the information processing terminal 1. The information processing terminal 1 includes a storage unit 11, a card operation control unit 12, a display control unit 13, an attention degree calculation unit 14, and a retrieval request unit 15.

The card operation control unit 12 includes a card management unit 111 and a card operation unit 112. The card management unit 111 performs execution management and display management for the operation on the card 50 and the operation on the word in the card 50. The card management unit 111 obtains data including the position, the size, and the like of the card 50 on which the operation is performed and the pointing operation and the annotation operation on the card 50. For example, in a case where the display 5 is a touch panel, the card management unit 111 obtains the operation on the input card 50 by detecting a touch on the touch panel performed by the user (operator). The card management unit 111 notifies the card operation unit 112 of the obtained data of the card 50 and stores the number of times of the operation in the card data table 121 in a state in which the number of times of the operation is associated with a card ID, which is an example of identification information of the card 50. The card data table 121 is stored in the storage unit 11.

The card operation unit 112 performs processing with the operation designated for the operated card 50. Also, in a case where the operation is the operation on the card 50, the card operation unit 112 stores the position and the size of the processed card 50 in a position/size table 123 in a state in which the position and size of the processed card 50 are associated with the card ID of the card 50. The position/size table 123 is stored in the storage unit 11. Also, in a case where the operation is the operation on a word in the card 50, the card operation unit 112 stores the pointing operation and the annotation operation on the word in the card 50 in the card operation table 122 in a state in which the pointing operation and the annotation operation on the word in the card 50 are associated with the card ID of the card 50. The card operation table 122 is stored in the storage unit 11.

Processing performed by the card management unit 111 in accordance with the types of operation is described below. In a case where the operation is addition of a new card 50, the card management unit 111 assigns the card ID to the new card 50, determines the position where the card 50 is displayed, stores the card data in the card data table 121, and stores the display position of the card 50 in the position/size table 123. Also, the card management unit 111 causes the server 4 to store in a state in which association with the card ID registered in the new card 50 is established. The information registered in the card 50 is digital information such as characters and images and the display position information. In a case where the new card 50 is blank, the card management unit 111 causes information indicating that the new card 50 is blank together with the display position information to be stored in the server 4 in a state in which the information indicating that the new card 50 is blank and the display position information are associated with the card ID. The card management unit 111 notifies the card operation unit 112 of an instruction to display the new card 50 in which the designated information has been registered at the determined position.

In a case where the operation is deletion of the card 50, the card management unit 111 deletes, from the card data table 121 and the position/size table 123, the card ID of the card 50 to be deleted and the positional information corresponding to the card ID. Also, the card management unit 111 causes the server 4 to delete the information on the card 50 to be deleted. The card management unit 111 instructs the card operation unit 112 to delete the card 50.

In the case of change in the card 50, the card management unit 111 updates the card data table 121 in accordance with processing of the change made to the card 50, and causes the server 4 to update the information on the card 50. The card management unit 111 notifies the card operation unit 112 of an instruction for the change made to the card 50.

In a case of movement of the card 50, the card management unit 111 causes the server 4 to update the positional information of the card 50 held by the server 4 such that the positional information is changed to that of the card 50 after the movement. Also, the card management unit 111 updates the position/size table 123 such that the positional information corresponding to the card ID of the card 50 held by the position/size table 123 is set as new positional information. The card management unit 111 instructs the card operation unit 112 to move the card 50.

In a case of duplication of the card 50, the card management unit 111 adds the card 50 similar to the duplication source card 50. For example, the card management unit 111 newly issues a card ID, determines the display position, stores the positional information and the content of the new card 50 in the card data table 121 in a state in which the display position and the content of the new card 50 are associated with the card ID, and causes the server 4 to similarly store the positional information and the content of the new card 50. Also, the card management unit 111 stores the card ID and the positional information of the new card 50 in the position/size table 123 in a state in which the card ID and the positional information of the new card 50 are associated with each other. After that, the card management unit 111 instructs the card operation unit 112 to display the new card 50 at the determined position.

The card operation unit 112 receives the information on the card 50 to be operated and information on the operation to be performed on the card 50 from the card management unit 111. The card operation unit 112 determines the image processing, the display position, or both of these for the card 50 in a case where the designated operation is applied to the card 50. For example, the card operation unit 112 operates the card application and the pointer application to operate the card 50. The card operation unit 112 instructs the display control unit 13 to display in accordance with the determined image processing.

For example, in the case of the addition of the card 50, the card operation unit 112 receives, from the card management unit 111, input of an instruction to display the card 50 including the positional information, the display information such as a size, a color, and a shape, and the registration information of the card 50 to be added. The card operation unit 112 instructs the display control unit 13 to display the card 50 at the designated position in the display 5. In the case of the deletion of the card 50, the card operation unit 112 instructs the display control unit 13 to delete the designated card 50 from the display 5. In the case of the change in the card 50, it is determined whether the difference to the current card 50 is added or the content of the current card 50 information is deleted and information is newly displayed. The card operation unit 112 instructs the display control unit 13 to display the card 50 with the determined content.

In the case of the movement of the card 50, the card operation unit 112 determines to display the card 50 while moving the card 50 from the current position toward the position after the movement. The card operation unit 112 instructs the display control unit 13 to display the determined operation of the card 50. In the case of the duplication of the card 50, the card operation unit 112 instructs the display control unit 13 to newly display the same card 50 as the duplication source card 50.

The attention degree calculation unit 14 calculates the degree of attention of the word in the card data table 121. The function of the attention degree calculation unit 14 is not used according to the first embodiment but is used according to a second embodiment. Thus, the function of the attention degree calculation unit 14 will be described in the second embodiment.

When the user inputs the retrieval keyword in the retrieval field in the screen 60, the retrieval request unit 15 accepts the input and transmits the retrieval keyword to the server 4. The retrieval keyword includes one or a plurality of words and is the retrieval condition. The server 4 extracts, as a retrieval result from the server 4, the cards 50 that satisfy the retrieval condition, for example, that include all the words of the retrieval keyword. The list of the extracted cards 50 is sorted in consideration of active discussion in the conference and displayed on the display 5.

[Functional Configuration of Server]

FIG. 4 is a functional configuration diagram illustrating an example of the server 4. The server 4 includes a storage unit 41, an acceptance unit 42, an analysis unit 43, an activity degree calculation unit 44, an MTF calculation unit 45, an MIDF calculation unit 46, a retrieval unit 47, and a notification unit 48.

The acceptance unit 42 accepts the data related to the card 50 transmitted from the information processing terminal 1, the operation event of the card 50 transmitted from the information processing terminal 1, and the retrieval keyword (retrieval condition) and the retrieval request of the card 50 transmitted from the information processing terminal 1. Information on the retrieval condition may be included in the retrieval request.

The analysis unit 43 analyzes the accepted card 50 and the operation events (operation log information) on the card 50. The analyses of the card 50 and the operation are performed on a conference-by-conference basis based on the card 50 used on a conference-by-conference basis. In the analysis of the card 50, when the word of the retrieval keyword is defined as the word X, how many words X that receive attention are included in the card 50 is checked. In the analysis of the operation, types, operation positions, and the like of the operation events such as annotation, pointing, scale-up, scale-down, and rotation are analyzed. The server 4 integrates the analysis results and registers the integrated analysis results in the card data table 412, the card operation table 413, and a position/size table 414 of the retrieval database 411. The retrieval database 411 is stored in the storage unit 41. The server 4 and the information processing terminal 1 are synchronized with each other and store the same data. Thus, the card data table 412, the card operation table 413, and the position/size table 414 are synchronized with the card data table 121, the card operation table 122, and the position/size table 123 stored in the information processing terminal 1, and information in the card data table 412, the card operation table 413, and the position/size table 414 and information in the card data table 121, the card operation table 122, and the position/size table 123 stored in the information processing terminal 1 match each other.

The activity degree calculation unit 44 calculates the degree of activity of the cards from the operation events of the user on the card 50. The MTF calculation unit 45 calculates an MTF, which is obtained by correcting the TF in the TF-IDF method. The MIDF calculation unit 46 calculates an MIDF, which is obtained by correcting the IDF in the TF-IDF method. None of the functions of the activity degree calculation unit 44, the MTF calculation unit 45, and the MIDF calculation unit 46 are used according to the first embodiment. However, the functions of these units are used according to the second embodiment. Thus, these functions will be described in the second embodiment.

The retrieval unit 47 extracts the cards 50 matching the retrieval condition in response to the retrieval request from the first information processing terminal out of the information processing terminals 1, calculates the number of times of the operation of the extracted cards as the scores, and sorts the cards 50 matching the retrieval condition in descending order of the scores.

The notification unit 48 notifies the first information processing terminal which is the information processing terminal 1 that has transmitted the retrieval request of the retrieval result in which the cards 50 matching the retrieval condition are sorted. The retrieval result is displayed in a side bar of the screen 60 or the screen 60 of the first information processing terminal in a display order in which the cards 50 matching the retrieval condition are sorted.

[Accumulation Process of Number of Times of Operation on Card]

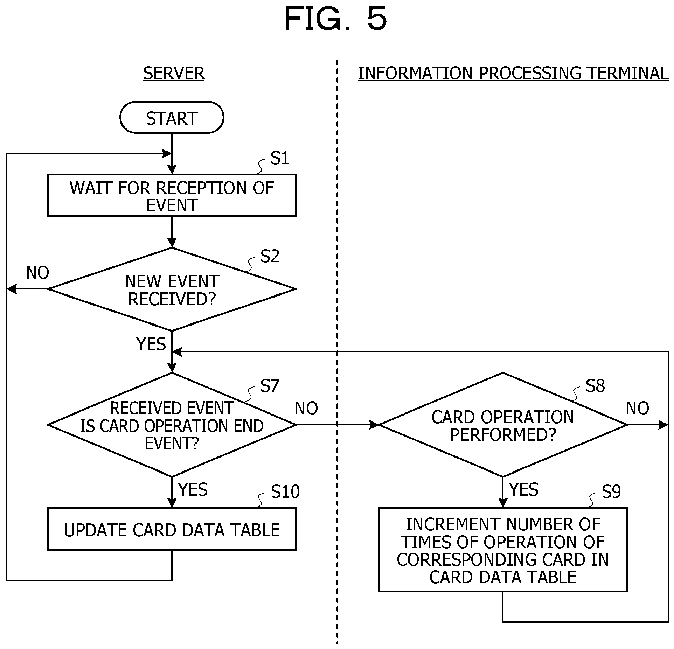

Next, various processes according to the first embodiment are described. First, an accumulation process of the number of times of the operation on the card is described with reference to FIG. 5. FIG. 5 is a flowchart illustrating an example of the accumulation process of the number of times of the operation on the card according to the first embodiment. The left side of a dotted line in FIG. 5 represents the operation of the server 4, and the right side of the dotted line in FIG. 5 represents the operation of the information processing terminal 1.

When the present process is started, in step S1, the server 4 (acceptance unit 42) monitors the operation events and waits until an event is accepted. IN step S2, the acceptance unit 42 determines whether a new event has been accepted. The acceptance unit 42 waits until an operation event is accepted and, when the operation event is accepted, proceeds to step S7. In step S7, the acceptance unit 42 determines whether the event is an operation end event of the card 50. In a case where the event is determined to be the operation end event of the card 50, the acceptance unit 42 proceeds to step S10 and updates the card data table 412. In a case where the event is not determined to be the operation end event of the card 50, the information processing terminal 1 is notified of information on the operation event.

Operation of the information processing terminal 1 notified of the information on the operation event from the server 4 is described. In step S8, the information processing terminal 1 (card operation control unit 12) determines whether the operation on the card has been performed based on the information on the new event notified by the server 4. In a case where it is determined that the operation on the card has been performed, in step S9, the number of times of the operation on the corresponding card in the card data table 121 is incremented, the process returns to step S1, and the server 4 waits until the next operation event is accepted. In a case where it is determined that the operation on the card has not been performed, the process returns to step S1 without incrementing the number of times of the operation on the corresponding card in the card data table, and the server 4 waits until the next operation event is accepted. To analyze whether the operation on the card has been performed, the number of times of the operation is counted for each card based on the operation events such as, for example, annotation, pointing, scale-up, scale-down, and rotation. Performing the annotation or pointing on the card once increments the number of times of the operation by one. Also, performing the operation such as scale-up, scale-down, or rotation on the card once increments the number of times of the operation by one. However, the method of counting the number of times of the operation on the card is not limited to this.

Through the above-described process, the number of times of the operation for each card is accumulated in the card data table 121. The card data table 412 of the server 4 and the card data table 121 of the information processing terminal 1 are synchronized with each other and store the same information. For example, the information accumulated in the card data table 121 is notified to the server 4 at predetermined timing and is stored in the card data table 412 of the server 4.

[Retrieval Process]

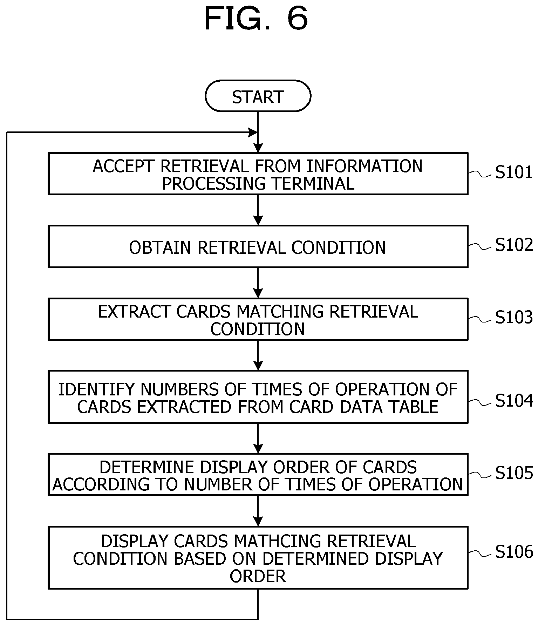

Next, a retrieval process (method of retrieving data) is described with reference to FIG. 6. FIG. 6 is a flowchart illustrating an example of the retrieval process according to the first embodiment. FIG. 6 represents the operation of the server 4.

When the present process is started, in step S101, the server 4 (acceptance unit 42) accepts the retrieval request and the retrieval condition from the information processing terminal 1 (first information processing terminal). Next, in step S102, the acceptance unit 42 obtains the retrieval condition (retrieval keyword to be processed).

Next, in step S103, the retrieval unit 47 extracts the cards 50 matching the retrieval condition from the card data table 412. Next, in step S104, the retrieval unit 47 identifies the numbers of times of the operation of the cards 50 extracted from the card data table 412.

Next, in step S105, the retrieval unit 47 calculates the numbers of times of the operation of the extracted cards 50 as the scores and sorts the cards 50 matching the retrieval condition in descending order of the scores.

Next, in step S106, the server 4 displays the cards 50 matching the retrieval condition in the side bar of the screen 60 or the screen 60 of the first information processing terminal in the sorted display order. For example, the notification unit 48 may notify the first information processing terminal of the sorted retrieval result, and, after that, the retrieval result is displayed in the side bar or the like of the screen 60 of the first information processing terminal. After that, the process returns to step S101 and waits until the next retrieval request is accepted.

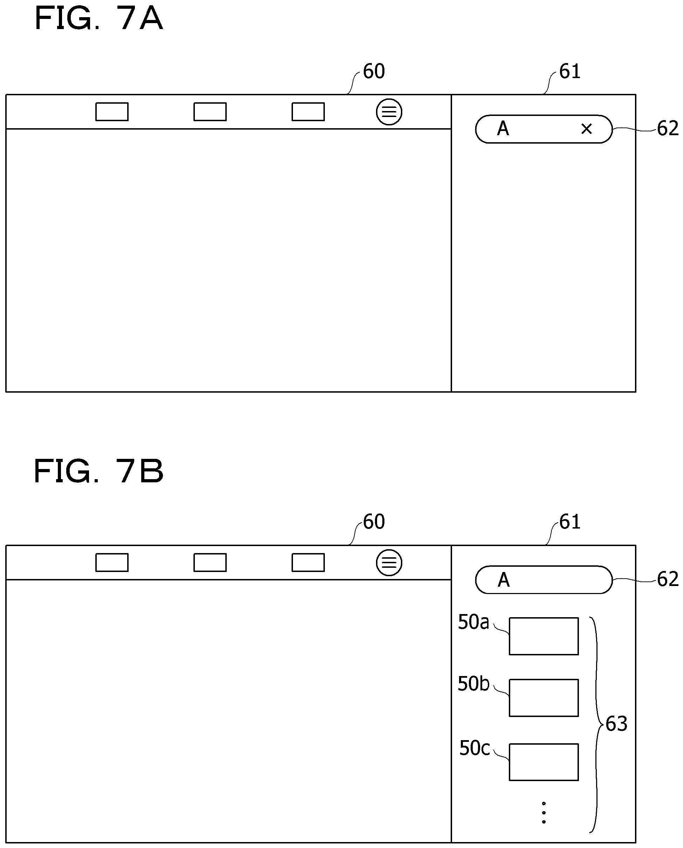

FIGs. 7A and 7B are diagrams illustrating an example of the retrieval result according to the first embodiment. FIG. 7A illustrates an example of a retrieval instruction screen of the first information processing terminal. FIG. 7B illustrates an example of a retrieval result screen of the first information processing terminal.

In the example illustrated in FIG. 7A, a display component 62 of an input field to which the retrieval condition is input is displayed in a side bar 61 of the screen 60 of the first information processing terminal. When the user inputs a retrieval keyword "A" as the retrieval condition and starts the retrieval by, for example, pressing an execution button, the retrieval condition and the retrieval request are transmitted to the server 4. The server 4 extracts the cards 50 including the retrieval keyword "A" from the card data table 412. The server 4 calculates the numbers of times of the operation of the extracted cards 50 as the scores and sorts the cards 50 matching the retrieval condition in descending order of the scores. As illustrated in an example of a card display field 63 of the retrieval result in FIG. 7B, the server 4 displays the cards 50 matching the retrieval condition in the side bar 61 of the screen 60 of the first information processing terminal in descending order of the numbers of times of the operation such that a card 50 with a larger number of times of the operation is displayed in an upper level. In the example illustrated in FIG. 7B, out of the cards 50 matching the retrieval condition, a card 50a with the largest number of times of the operation is displayed at an uppermost level, and next, cards 50b, 50c, and so forth are displayed in descending order of the number of times of the operation.

As described above, with the method of retrieving data according to the embodiment, an operation event of a digital card is accepted, a retrieval condition of the digital card is accepted, and a card matching the retrieval condition displayed in the past is retrieved based on the retrieval condition. In displaying the retrieval result, a card 50 with a larger number of times of the operation out of the digital cards matching the retrieval condition is displayed at an upper level. It may be said that there is a high possibility that the card 50 actively discussed in a conference is actively discussed again in a subsequent conference. Displaying such a card 50 at an upper level produces an effect that this card 50 may be quickly found.

Although the above description has been made with the example in which the cards 50 matching the retrieval condition are sorted in the order of the numbers of times of the operation according to the first embodiment, this is not limiting. For example, out of the cards 50 matching the retrieval condition, cards operated ten or more times in the past may be displayed at an upper position. Out of the cards 50 matching the retrieval condition, a card operated ten or more times within one week may be displayed at a higher position. The number of times of the operation of ten or more times and the period such as one week in these examples are merely exemplary and not limiting.

<Second Embodiment

According to the second embodiment, a new method of scoring is provided by changing the scores based on the level of importance of the words for which the level of importance of the cards and words are adjusted by using an MTF-MIDF method obtained by correcting the TF-IDF method. For example, in accordance with the extent of activity of discussion and the degree of importance of the words in a conference, a method (scoring) of calculating the degree of relevance of the cards 50 to the retrieval condition and a method of determining the display order of the cards 50 are provided.

For example, in the analysis of the operation events (operation log), the degree of activity of the cards 50 and the degree of attention of the word to be retrieved in the cards 50 are calculated. Regarding the degree of activity of the cards 50, it is analyzed that an important card 50 is placed at the center of the screen 60 and auxiliary cards 50 are placed around the important card 50, and, in addition, the frequencies of the operation (movement, resizing, and page turning) on the cards 50 are analyzed. Regarding the degree of attention of the words, how many times the operation events of the annotation and pointing are performed is analyzed. Pointing not directed to the word in the card 50 is not considered.

Thus, with the method of retrieving data according to the present disclosure, the degree of importance and the degree of matching of the card are calculated in accordance with the operation (annotation, pointing, scale-up, scale-down, rotation, and the like) on the card 50 the screen of which is shared between a plurality of users at the time of the conference. Accordingly, out of the cards 50 having a high degree of matching with the retrieval query, for example, out of the cards 50 matching the retrieval condition, a card 50 having undergone a large number of times of the operation is displayed at an upper position. As a result, the card 50 actively discussed in the conference may be displayed at an upper position. It may be said that there is a high possibility that the card 50 actively discussed in a conference is actively discussed again in a subsequent conference. Displaying such a card 50 at an upper level produces an effect that this card 50 may be quickly found.

[Functional Configuration of Information Processing Terminal]

According to the second embodiment, out of the functional configurations of the information processing terminal 1 illustrated in FIG. 3, the function of the attention degree calculation unit 14 not in use according to the first embodiment is described with reference to FIGs. 8A to 8C. FIGs. 8A to 8C are diagrams explaining the degree of attention of the word. Other functions of the information processing terminal 1 illustrated in FIG. 3 (the storage unit 11, the card operation control unit 12, the display control unit 13, and the retrieval request unit 15) have been described according to the first embodiment. Thus, redundant description of these functions is omitted.

The attention degree calculation unit 14 calculates the degree of attention of the word in the card data table 121. FIGs. 8A to 8C are diagrams explaining the degree of attention of the word. The degree of attention of the word indicates a degree to which each word included in the card 50 receives attention from users having participated in a conference. The degree of attention of the word is obtained by quantifying how many times a word in the card 50 is pointed or how many annotations for the word are present.

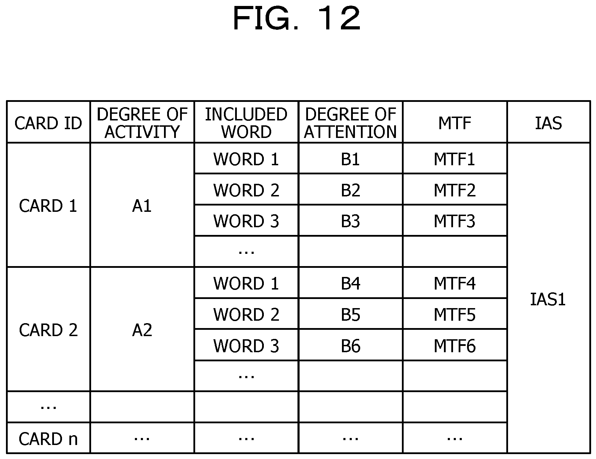

The attention degree calculation unit 14 monitors the operation events related to the operation in which the user performs the pointing and the annotation on the card 50 and creates an attention degree map having the same size as that of the card 50 based on an occurrence frequency of the operation events. Description of the creation of the attention degree map continues with reference to FIGs. 8A to 8C. FIG. 8A illustrates operation events of an annotation operation AT and a pointing operation PT performed on the displayed card 50 by using a mouse. These operation events are executed by the card operation unit 112 based on instructions from the card management unit 111. The attention degree calculation unit 14 monitors the operation events and, as illustrated in FIG. 8B, creates the attention degree map having the same size as that of the card 50 based on the occurrence frequency of the operation events. An area Ar1 is an area having a high degree of attention with respect to a word X, and an area Ar2 is an area having a slightly high degree of attention with respect to a word Y. Based on word positions in the attention degree map (card coordinate system), the attention degree calculation unit 14 associates the frequency value of each word and updates the degree of attention stored in the card data table 121 on a word-by-word basis. The card data table 121 in FIG. 8C abstracts and indicates the item of the degree of attention of the word. The degree of attention corresponding to each word is updated. The degree of attention of the word is associated on a card-ID-by-card-ID basis (see FIG. 12).

The attention degree calculation unit 14 transmits the updated word-by-word degree of attention to the server 4, and the server 4 updates the word-by-word degree of attention stored in the card data table 412, which will be described later, based on the received word-by-word degree of attention.

Coordinate information on each word in the card 50 stored in the storage unit 11 in advance is used to determine which word in the card 50 is pointed when the operation event of the annotation or the pointing is performed.

[Functional Configuration of Server]

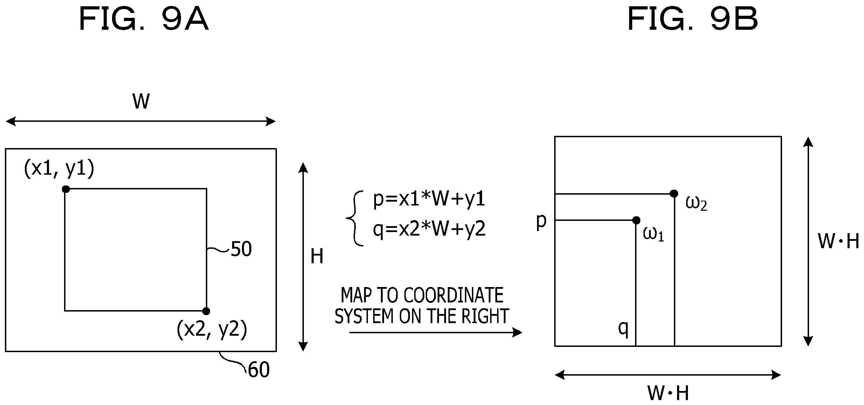

FIG. 4 is the functional configuration diagram illustrating the example of the server 4. According to the second embodiment, out of the functional configurations of the server 4, the functions of the activity degree calculation unit 44, the MTF calculation unit 45, and the MIDF calculation unit 46, which are not in use according to the first embodiment and illustrated in FIG. 4, are described with reference to FIGs. 9A and 9B. FIGs. 9A and 9B are a diagram explaining the degree of activity of the card. Other functions of the server 4 illustrated in FIG. 4 have been described according to the first embodiment. Thus, redundant description of these functions is omitted.

The activity degree calculation unit 44 calculates the degree of activity of the card from the operation events of the user on the card 50. FIGs. 9A and 9B are a diagram explaining the degree of activity of the card. The degree of activity of the card is obtained by quantifying whether the card 50 is placed at the center of the screen 60 or how frequently the card 50 is moved. The degree of activity of the card indicates a degree to which a discussion for the card 50 has been actively made. The degree of activity of the card is calculated based on, for example, the operation events such as movement, resizing, and page turning of the card.

The activity degree calculation unit 44 monitors, for example, the operation events including the movement, resizing, and page turning of the card. The activity degree calculation unit 44 may store the display position and the size of the card in the position/size table 414. The activity degree calculation unit 44 calculates the "degree of importance of display" from the display position and the size of the card and accumulates the value of the degree of importance of display every time the operation of movement, resizing, or turning a page of the card is observed from the operation events of the user. This cumulative value is represented by Expression (A) below and is referred to as the degree of activity of the card. The card 50 displayed on the screen 60 illustrated in FIG. 9A is an example of a card Z represented by Expression (A). A horizontal size and a vertical size of the screen 60 are denoted by W and H, respectively.

Degree of activity of card $Z = \omega_1(x, y, W, H) + \omega_2(x, y, W, H) + ... (A)$

For calculating the degree of activity, first, as illustrated in FIG. 9A, the activity degree calculation unit 44 learns $\omega(x, y, W, H)$ indicating the "degree of importance of display" of the card 50 in advance and converts a screen coordinate system in FIG. 9A into the coordinate system of the map in FIG. 9B. Here, $\omega(x, y, W, H)$ is accumulated in a display importance degree map in advance. The degree of importance of display is calculated from the display position and the size of the card 50.

In the example illustrated in FIGs. 9A and 9B, the following $\omega$ is represented as $\omega_1$: $\omega$ obtained by converting the card 50 of the screen coordinate system indicated by the upper left coordinates (x1, y1) and the lower right coordinates (x2, y2) of the card 50 in FIG. 9A into the coordinate system of the map in FIG. 9B by using expressions $p = x1 \times W + y1$, $q = x2 \times W + y2$. Here, $\omega_1(x, y, W, H)$ is the degree of importance of display and is used for the degree of activity of Expression (A). Regarding the degree of activity of the card Z, every time the above-described operation is performed, the degree of activity of this operation is added.

For example, it is assumed that, in a case where the card 50 illustrated in FIG. 9A is moved by the next user operation, $\omega_2(x, y, W, H)$ illustrated in the map in FIG. 9B is obtained as the degree of importance of display when the upper left coordinates and the lower right coordinates of the screen coordinate system after the movement are converted into the coordinate system of the map in FIG. 9B. In this case, the activity degree calculation unit 44 accumulates the value of the degree of importance of display every time an operation event on the card 50 by the user is observed and calculates the degree of activity as $\omega_1(x, y, W, H) + \omega_2(x, y, W, H)$. For example, the degree of activity of the card Z is an added value of estimated values of an activity state of the same card 50 so far, and the degree of importance of display $\omega(x, y, W, H)$ is added every time the same card 50 is operated. Here, $\omega$ may be learned in a remote conference in which a plurality of users participate or created on an adhoc basis.

The MTF calculation unit 45 calculates the MTF, which is obtained by correcting the TF in the TF-IDF method. Expression (3) for calculating the MTF is represented below.

$$MTF(Z, X) = \frac{Appearance\ frequency\ of\ word\ X\ in\ card\ Z\ weighted\ by\ degree\ of\ attention}{Appearance\ frequency\ of\ all\ words\ in\ card\ Z\ weighted\ by\ degree\ of\ attention}$$

... (3)

An expression that calculates the appearance frequency of the word X weighted by the degree of attention of the word X in the card Z is MTF(Z, X).

The MIDF calculation unit 46 calculates the MIDF, which is obtained by correcting the IDF in the TF-IDF method. Expressions (4) and (5) for calculating the MIDF are represented below.

$$IAS = \frac{1}{Degree\ of\ activity\ of\ card\ 1} + \cdots + \frac{1}{Degree\ of\ activity\ of\ card\ n}$$

... (4)

A value obtained by adding up the inverses of the degree of activity of the cards by the number of cards from cards 1 to n is represented as IAS in Expression (4).

$$MIDF(X) = log \frac{IAS}{\frac{a1}{Degree\ of\ activity\ of\ card\ 1} + \cdots + \frac{an}{Degree\ of\ activity\ of\ card\ n}}$$

... (5)

an = 1: If card n includes word X
an = 0: If card n does not include word X

In Expression (5), MIDF (X) indicates that the card n (n is an integer greater than or equal to 1) includes the word X when an is 1 and the card n does not include the word X when an is 0.

Based on a total score obtained by adding up the scores of MTF (Z, X) and MIDF (X), the activity degree calculation unit 44 sorts the cards 50 matching the retrieval condition and determines the display order.

The retrieval unit 47 extracts the cards 50 matching the retrieval condition in response to the retrieval request from the information processing terminal 1, calculates a total scoring of each card by adding up the values of the MTF and the MIDF from the extracted cards, and sorts the cards 50 matching the retrieval condition in descending order of the scores.

The notification unit 48 notifies the information processing terminal 1 that has transmitted the retrieval request of the retrieval result in which the cards 50 matching the retrieval condition are sorted. The information processing terminal 1 displays in the screen 60 or the side bar in the display order in which the cards 50 matching the retrieval condition are sorted.

[Accumulation Process of Degree of Activity of Card and Degree of Attention of Word]

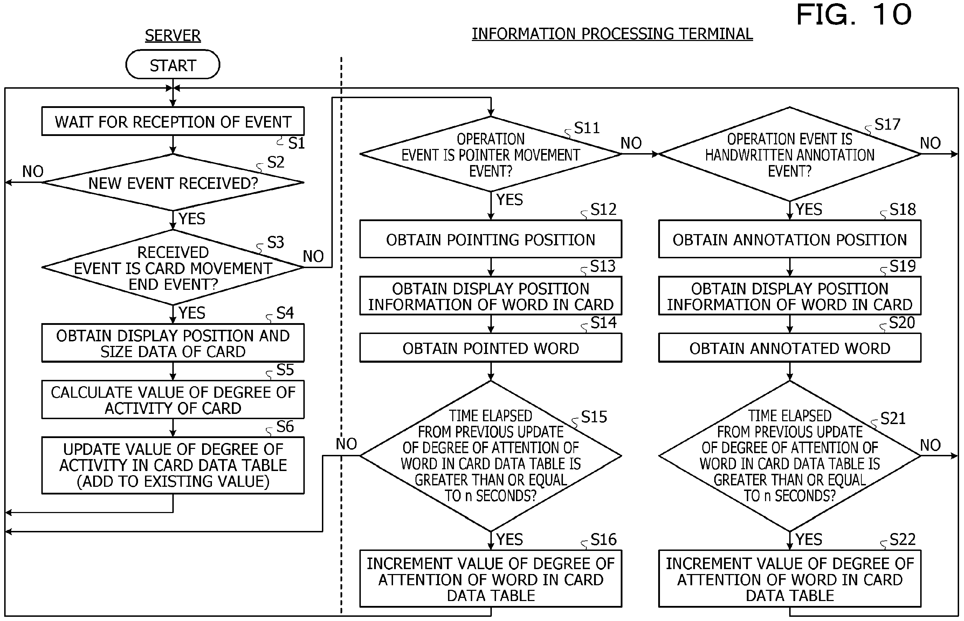

Next, various types of processes according to the second embodiment are described. First, an accumulation process of the degree of activity of the card and the degree of attention of the word are described with reference to FIG. 10. FIG. 10 is a flowchart illustrating an example of the accumulation process of the degree of activity of the card and the degree of attention of the word according to the second embodiment. The left side of a dotted line in FIG. 10 represents the operation of the server 4, and the right side of the dotted line in FIG. 10 represents the operation of the information processing terminal 1.

When the present process is started, in step S1, the server 4 (acceptance unit 42) monitors the operation events and waits until an event is accepted. IN step S2, the acceptance unit 42 determines whether a new event has been accepted. Upon accepting an operation event, the acceptance unit 42 proceeds to step S3 and determines whether the operation event is a movement end event of the card 50. In a case where the acceptance unit 42 determines that the operation event is the movement end event of the card 50, the acceptance unit 42 proceeds to step S4. In a case where the acceptance unit 42 determines that the operation event is not the movement end event of the card 50, the acceptance unit 42 notifies the information processing terminal 1 of information on the operation event.

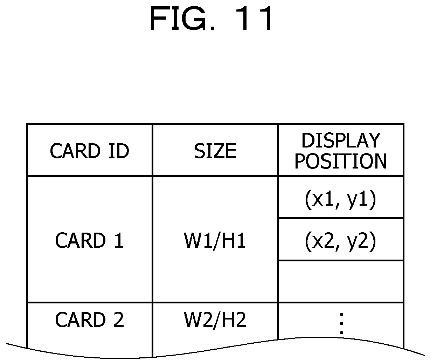

In step S4, the activity degree calculation unit 44 obtains data of the display position and the size of the card 50 and stores the obtained data in the position/size table 414. FIG. 11 is a diagram illustrating an example of the position/size table 414. The position/size table 414 stores, for each card identified by the card ID, the size (W, H) and the display position ((upper left coordinates), (lower right coordinates)) of the card.

Next, in step S5, the activity degree calculation unit 44 calculates the value of the degree of activity of the card based on Expression (A). Next, in step S6, the activity degree calculation unit 44 adds the value of the degree of activity in the card data table 412 to the existing value (the initial value is 0), updates the degree of activity, returns to step S1, and waits until the next operation event is received. FIG. 12 is a diagram illustrating an example of the card data table 412. The degree of activity (A1, A2, ...) is stored for each card ID in the card data table 412.

Referring back to FIG. 10, operation of the information processing terminal 1 notified of the information on the operation event from the server 4 is described. In step S11, the information processing terminal 1 (the card operation control unit 12) determines whether the operation event is a movement event of a pointer of the mouse or the like based on the information on the operation event notified by the server 4 in step S3. In a case where the operation event is the movement event of the pointer, the card operation control unit 12 proceeds to step S12. In a case where the operation event is not the movement event of the pointer, the card operation control unit 12 proceeds to step S17.

In step S12, the card operation control unit 12 obtains the pointing position from the information on the operation event and, in step S13, obtains the display position information of the pointed word in the card. Next, in step S14, the card operation control unit 12 obtains the pointed word.

Next, in step S15, the attention degree calculation unit 14 determines whether the time elapsed from the previous update of the degree of attention of the pointed word in the card data table 121 is greater than or equal to predetermined n seconds. In a case where the time elapsed from the previous update is greater than or equal to n seconds, the process proceeds to step S16. In a case where the time elapsed from the previous update is smaller than n seconds, the process returns to step S1 of the server 4 and waits until the next operation event is received.

In step S16, the attention degree calculation unit 14 adds one to the value of the degree of attention of the pointed word in the card data table 121, returns to step S1 of the server 4, and waits until the next operation event is received.

In a case of proceeding from step S11 to step S17, the card operation control unit 12 determines whether the operation event is an operation event of handwritten annotation based on the information on the operation event notified from the server 4. In a case where the operation event is not an operation event of the annotation, the card operation control unit 12 returns to step S1 of the server 4 and waits until the next operation event is received. In a case where the operation event is an operation event of the annotation, the card operation control unit 12 proceeds to step S18, obtains the annotation position and, in step S19, obtains the display position information of the word in the card. Next, in step S20, the card operation control unit 12 obtains an annotated word.

Next, in step S21, the attention degree calculation unit 14 determines whether the time elapsed from the previous update of the degree of attention of the annotated word in the card data table 121 is greater than or equal to predetermined n seconds. In a case where the time elapsed from the previous update is greater than or equal to n seconds, the process proceeds to step S22. In a case where the time elapsed from the previous update is smaller than n seconds, the process returns to step S1 of the server 4 and waits until the next operation event is received.

In step S22, the attention degree calculation unit 14 adds one to the value of the degree of attention of the annotated word in the card data table 121, returns to step S1 of the server 4, and waits until the next operation event is received.

Through the above-described process, the degree of activity of the card and the degree of attention of the word are calculated. The degree of attention of the word calculated by the information processing terminal 1 is notified to the server 4 and is stored in the card data table 412 of the server 4. Thus, the card data table 412 of the server 4 and the card data table 121 of the information processing terminal 1 are synchronized with each other and store the same information.

[TF Correction Process]

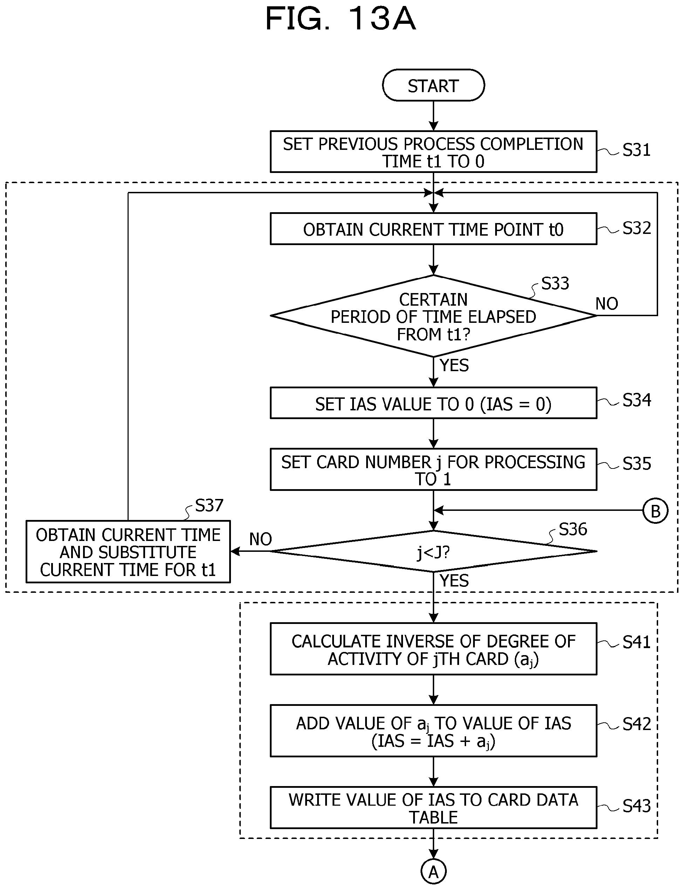

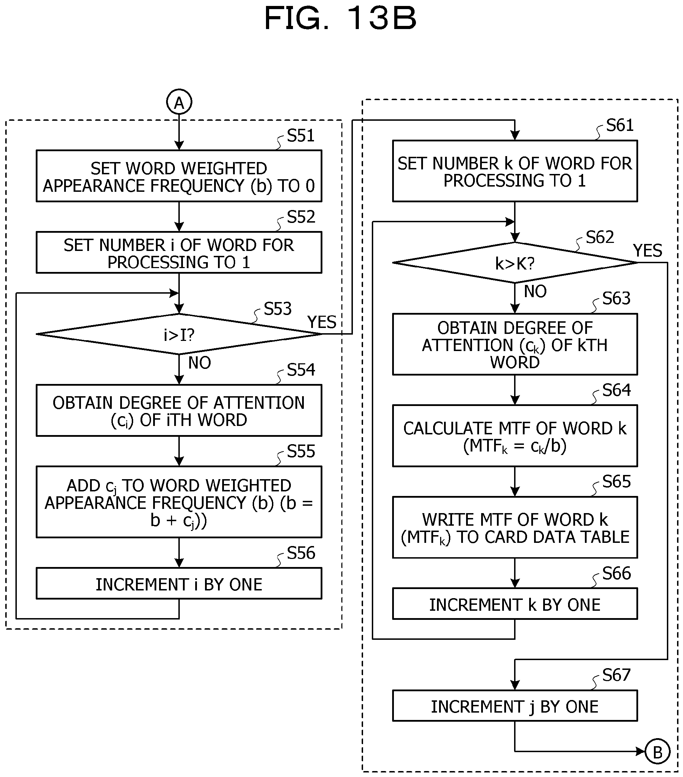

Next, a TF correction process is described with reference to FIGs. 13A and 13B. FIGs. 13A and 13B are a flowchart illustrating an example of the TF correction process according to the second embodiment. FIGs. 13A and 13B illustrate the operation of the server 4. During the process illustrated in FIGs. 13A and 13B, the card data table 412 in FIG. 12 is used as a state of a process target table. The total number of the cards in the card data table 412 is denoted by J described below, and the total number of words included in a card j is denoted by I described below.

When the present process is started, in step S31, the MTF calculation unit 45 sets a previous process completion time t1 to 0. Next, in step S32, the MTF calculation unit 45 obtains the current time t0. Next, in step S33, the MTF calculation unit 45 determines whether a certain period of time has elapsed from the previous process completion time t1 based on the current time t0. The MTF calculation unit 45 returns to step S32 until the certain period of time elapses and proceeds to step S34 when the certain period of time has elapsed.

In step S34, the MTF calculation unit 45 sets the value of the IAS (see Expression (4)) of the card data table 412 to an initial value of 0. Next, in step S35, the MTF calculation unit 45 sets a card number j for processing to 1. Next, in step S36, the MTF calculation unit 45 determines whether the card number j for processing is smaller than a total number of cards J. In a case where the card number j for processing is greater than or equal to the total number of cards J in the card data table 412, the current time is obtained, the current time is substituted for t1 denoting the previous process completion time, and the process returns to step S32.

In step S36, in a case where the card number j for processing is smaller than the total number of cards J, the process proceeds to step S41 and the MIDF calculation unit 46 calculates an inverse of the degree of activity of a jth card ($a_j$) based on Expression (4). Next, in step S42, the MIDF calculation unit 46 adds the calculated $a_j$ to the value of the IAS in the card data table 412. Next, in step S43, the MIDF calculation unit 46 writes the value of IAS + $a_j$ to the IAS corresponding to the card ID of the card number j in the card data table 412. By repeating steps S41 to S43 for all the cards, the IAS of Expression (4) is calculated.

Next, in step S51, the MTF calculation unit 45 sets the word weighted appearance frequency (b) to an initial value of 0.

Next, in step S52, the MTF calculation unit 45 sets a number i of a word for processing to 1. Next, in step S53, the MTF calculation unit 45 determines whether the number i of the word for processing is greater than a total number I of the words. In a case where the number i of the word for processing is smaller than or equal to the total number I of the words, the process proceeds to step S54. In a case where the number i of the word for processing is greater than the total number I of the words included in the card j, the process proceeds to step S61.

In step S54, based on the operation event, the MTF calculation unit 45 obtains the degree of attention ($C_i$) of an ith word depending on how many times the word with the number i in the card has been pointed and how many times the word with the number i has been annotated. Next, in step S55, the MTF calculation unit 45 adds the degree of attention ($C_i$) to the word weighted appearance frequency (b) (b = b + ($C_i$)). Next, in step S56, the MTF calculation unit 45 adds one to the number i of the word and returns to step S53. By repeating steps S51 to S56 by as many times as the total number I of the words included in the card j, the denominator of the MTF (Z, X), for example, the weighted appearance frequency based on the degree of attention of all the words in a card A (here, the card j) is calculated (see the denominator of Expression (3)).

In step S53, in a case where the number i of the word for processing is greater than the total number I of words, the process proceeds to step S61, and the MTF calculation unit 45 sets a number k of the word for processing to 1. Here, k is the retrieval keyword, and K is a total number of words of the retrieval keyword.

Next, in step S62, the MTF calculation unit 45 determines whether the number k of the word for processing is greater than a total number K of the words. In a case where the number k of the word for processing is smaller than or equal to the total number K of the words, in step S63, the MTF calculation unit 45 obtains the degree of attention ($C_k$) of a kth word. Next, in step S64, the MTF calculation unit 45 calculates the MTF of a word k based on MTF = $MTF_k$ = $C_k$/b.

Next, in step S65, the MTF calculation unit 45 writes the calculated value of $MTF_k$ in an item of MTF corresponding to the kth word in the card data table 412. Next, in step S66, the MTF calculation unit 45 adds one to the number k of the word and returns to step S62. While the number k of the word for processing is equal to or smaller than the total number K of the words in step S62, steps S63 to S66 are repeated, and the weighted appearance frequency based on the degree of attention of the words of the retrieval keyword in the card A (here, the card j) is calculated (see the numerator of Expression (3)).

In a case where the number k of the word for processing is greater than the total number K of the words, the process proceeds to step S67, the MTF calculation unit 45 adds one to the card number j, and MTF calculation unit 45 returns to step S36. In steps S61 to S67, the MTF is calculated (Expression (3)). Until the card number j is greater than or equal to the total number J of the cards in step S36, the process in steps S41 to S67 is repeated. When the card number j is greater than or equal to the total number J of the cards in step S36, the process proceeds to step S37, the MTF calculation unit 45 obtains the current position and substitutes the current position for t1, and the MTF calculation unit 45 returns to step S32.

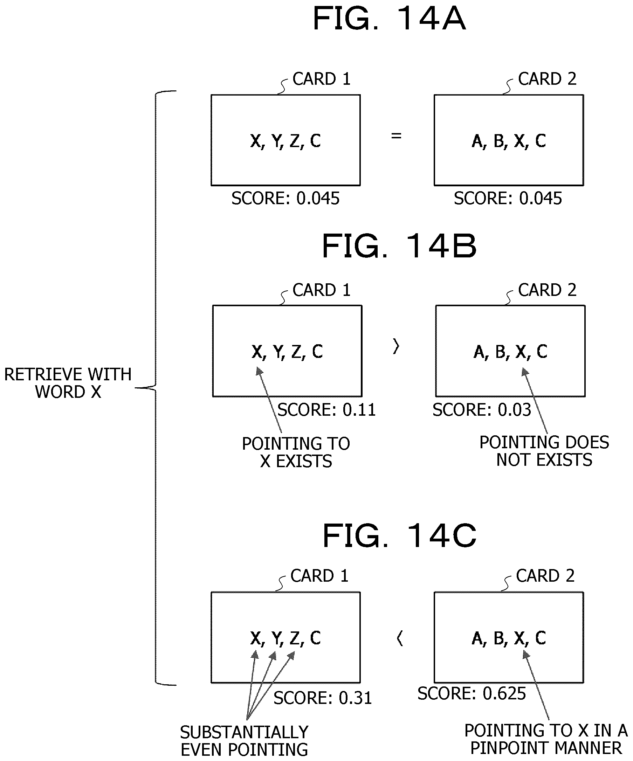

FIGs. 14A to 14C are a diagram explaining effects of the TF correction process according to the second embodiment. As the preconditions, examples of scores of a TF calculation result of a reference example (FIG. 14A) and MTF calculation results of the present embodiment (FIG. 14B and 14C) when a card 2 is auxiliary (the number of times of the operation on which is small and which is not actively discussed) with respect to a main card 1 (the number of times of the operation on which is great and which is actively discussed) in a certain conference are illustrated.

FIG. 14A illustrates an example of the scores of the calculation result of the TF represented in Expression (1) when card retrieval is performed with the word X. FIG. 14B illustrates an example of the scores of the calculation result of the MTF according to the present embodiment represented in Expression (3) when the card retrieval is performed with the word X (case 1). FIG. 14C illustrates an example of the scores of the calculation result of the MTF according to the present embodiment represented in Expression (3) when the card retrieval is performed with the word X (case 2).

Since the cards 1 and 2 each have a single word X in the TF calculation result of the reference example illustrated in FIG. 14A, the scores are the same. For example, in the reference example, there is no element that the card 1 has been operated many times and is important for calculating the TF, and a single word X appears out of four words in each of the card 1 and the card 2. Thus, the score "0.045" are the same.

In contrast, as illustrated in FIG. 14B, whereas the card 1 has pointing to the word X, the card 2 does not have pointing to the word X. In this case, there is an element that the card 1 has been operated many times and is important. In this case, according to the present embodiment, the score "0.11" of the card 1 is greater than the score "0.03" of the card 2.

As a result, according to the present embodiment, since there is an element that the card 1 is important due to the pointing operation, the card 1 including the important word (word X) being a target of the pointing is given a higher priority than the card 2 and is displayed at an upper position.

As illustrated in FIG. 14C, in a case where pointing to the word X exists in both the card 1 and the card 2, the even pointing to the words X, Y, and Z exists in the card 1, and the pointing to the word X in a pinpoint manner exists in the card 2, there is an element that the card 2 in which the pointing operation to the word X is performed in a pinpoint manner is more important than the card 1. In this case, according to the present embodiment, the score "0.625" of the card 2 is greater than the score "0.31" of the card 1. As a result, according to the present embodiment, since there is an element that the card 2 in which the pointing to the word X in a pinpoint manner exists is important, the card 2 including the important word (word X) being a target of the pointing is given a higher priority than the card 1 and is displayed at an upper position.

As described above, by using the calculation of the MTF according to the present disclosure, compared to the case where the calculation of the TF is used, a digital card that is actively discussed in a conference may be given a priority in display.

[IDF Correction Process]

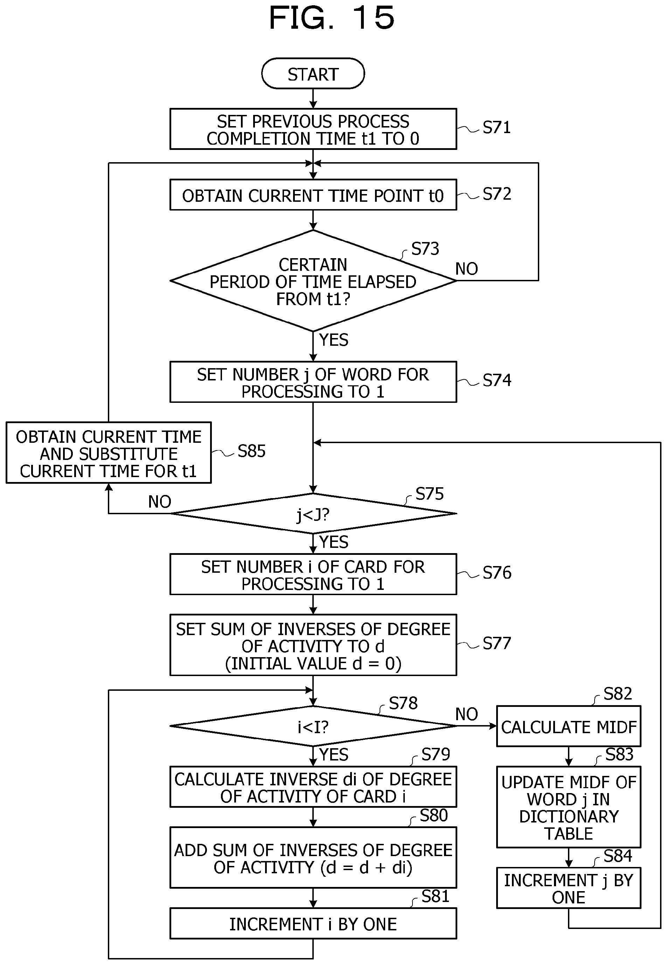

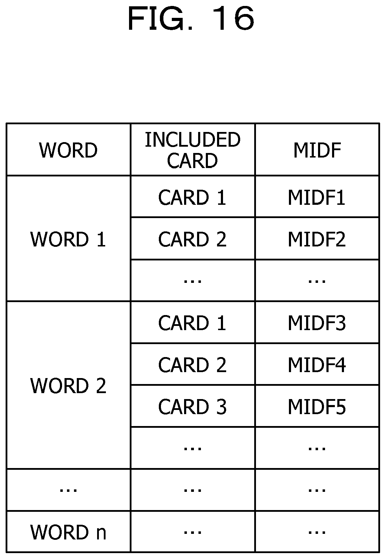

Next, an IDF correction process is described with reference to FIG. 15. FIG. 15 is a flowchart illustrating an example of the IDF correction process according to the second embodiment. FIG. 15 illustrates the operation of the server 4. During the process illustrated in FIG. 15, a dictionary table 415 in FIG. 16 is used as a state of a process target table. The total number of the cards in the card data table 412 is denoted by I described below, and the total number of words included in a card j is denoted by J described below.

When the present process is started, in step S71, the MIDF calculation unit 46 sets the previous process completion time t1 to 0. Next, in step S72, the MIDF calculation unit 46 obtains the current time t0. Next, in step S73, the MIDF calculation unit 46 determines whether a certain period of time has elapsed from the previous process completion time t1 based on the current time t0. The MIDF calculation unit 46 returns to step S72 until the certain period of time elapses and proceeds to step S74 when the certain period of time has elapsed.

In step S74, the MIDF calculation unit 46 sets the number j of the word for processing to 1. Next, in step S75, the MIDF calculation unit 46 determines whether the number j of the word for processing is smaller than a total number J of the words included in the card j. In a case where the number j of the word for processing is greater than or equal to the total number J of the words included in the card j, the current time is obtained, the current time is substituted for t1 denoting the previous process completion time, and the process returns to step S72.

In a case where the number j of the word for processing is smaller than the total number J of the words included in the card j, the process proceeds to step S76, and the MIDF calculation unit 46 sets a number i of the card for processing to 1. Next, in step S77, the MIDF calculation unit 46 sets the sum of the inverses of the degree of activity of the number i of the card to d. An initial value of d is 0.

Next, in step S78, the MIDF calculation unit 46 determines whether the number i of the card for processing is smaller than the total number I of the cards. In a case where the number i of the card for processing is smaller than the total number I of the cards, the process proceeds to step S79, and the MIDF calculation unit 46 calculates an inverse $d_i$ of the degree of activity of the number i of the card. Next, in step S80, the MIDF calculation unit 46 adds the inverse $d_i$ of the degree of activity to the inverse d of the degree of activity. Next, in step S81, the MIDF calculation unit 46 adds one to the number i of the card and returns to step S78.

In step S78, the MIDF calculation unit 46 repeats steps S79 to S81, continues to add the inverse $d_i$ of the degree of activity to the inverse d of the degree of activity, and calculates the inverse d of the degree of activity that is the sum of inverses $d_i$ of the degree of activity.

In step S78, the MIDF calculation unit 46 proceeds to step S82 when the number i of the card for processing is greater than or equal to the total number I of the cards. In step S82, the MIDF calculation unit 46 substitutes the inverse d of the degree of activity for the denominator of Expression (5), substitutes the IAS stored in an item of the IAS of the card data table 412 for the numerator of Expression (5), and calculates the MIDF.

Next, in step S83, the MIDF calculation unit 46 updates the value in the MIDF item of the number j of the word in the dictionary table 415 with the calculated value of MIDF. The dictionary table 415 is stored in the storage unit 41 of the server 4. The server 4 may transmit information in the dictionary table 415 to the information processing terminal 1, and the information processing terminal 1 may store the received information in a dictionary table 124 of the storage unit 11.

Next, in step S84, the MIDF calculation unit 46 adds one to the number j of the word and returns to step S75. In step S75, steps S79 to S84 are repeated until the number j of the word is greater than or equal to the total number J of the cards, and the MIDF of the number j of each word is calculated. When the card number j is greater than or equal to the total number J of the words included in the cards j in step S75, the MIDF calculation unit 46 proceeds to step S85, obtains the current position, substitutes the current position for t1, and returns to step S72.

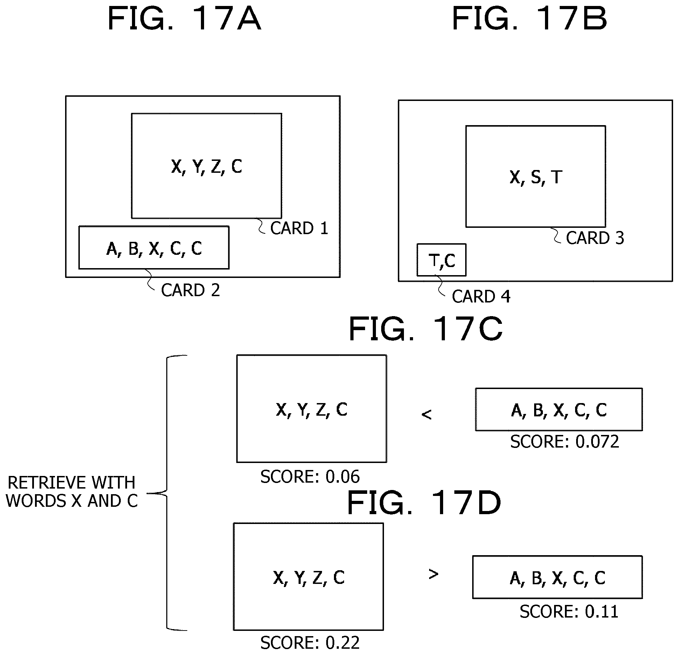

FIGs. 17A to 17D are a diagram explaining effects of the IDF correction process. As the preconditions, it is assumed that a main (actively discussed) card 1 and an auxiliary card 2 are displayed in the screen 60 in a discussion of a certain conference as illustrated in FIG. 17A. It is also assumed that a main (actively discussed) card 3 and an auxiliary card 4 are displayed in the screen 60 in a discussion of a conference held on a different day as illustrated in FIG. 17B. In this case, score examples of the IDF calculation result (FIG. 17C) of the reference example and the MIDF calculation result (FIG. 17D) according to the present embodiment when the retrieval keywords are the word X and the word C are illustrated. With these examples, depending on arrangement of the cards 1 to 4, scoring results are different between the calculation of the IDF in the reference example and the calculation of the MIDF according to the present embodiment.

As illustrated in FIG. 17C, in the IDF calculation without an element that the card 1 is important, the score of the card 2 including many words C is higher than the score of the card 1, and the card 2 is displayed at an upper position. In contrast, in the IDF (MIDF) calculation according to the present embodiment, as illustrated in FIG. 17D, there is an element that the card 1 is important because of the arrangement of the card 1 (arranged at the center). Thus, the score of the card 1 is higher than the score of the card 2. As a result, out of the cards including the word X and the word C as the retrieval keywords, the card 1 including the word X which is also included in the card 3 displayed at the center on the different day and considered to be important is displayed at an upper position.

[Retrieval Process]

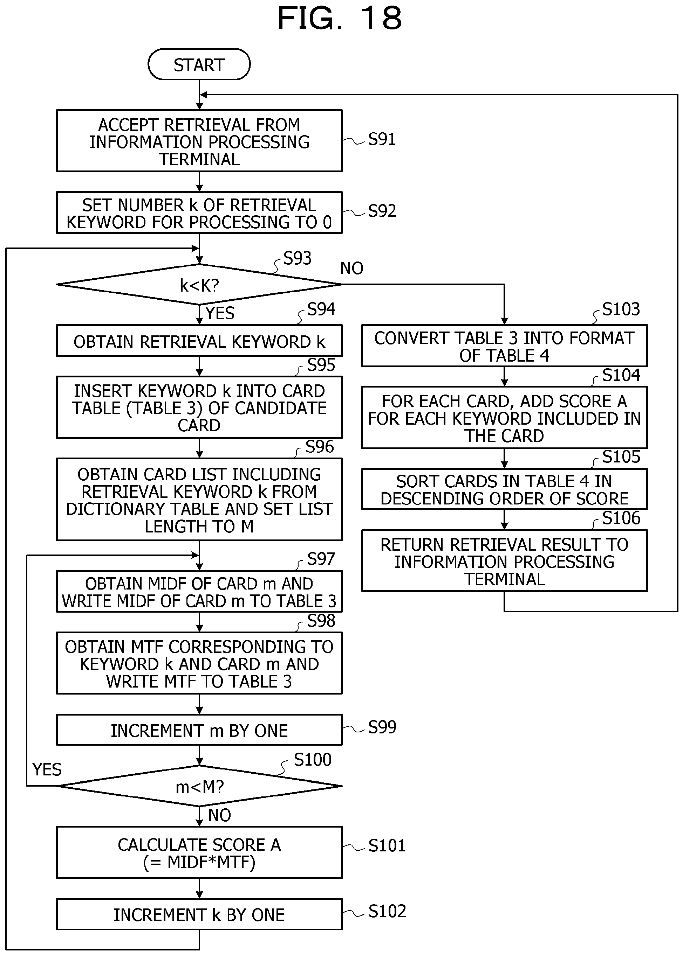

Next, a retrieval process (method of retrieving data) is described with reference to FIG. 18. FIG. 18 is a flowchart illustrating an example of the retrieval process according to the second embodiment. FIG. 18 illustrates the operation of the server 4. The total number of retrieval keywords is denoted by K.

When the present process is started, in step S91, the server 4 (acceptance unit 42) accepts the retrieval request and the retrieval condition from the information processing terminal 1. Next, in step S92, the acceptance unit 42 obtains the retrieval keyword for processing from retrieval condition and sets a number k of the retrieval keyword to 0.

Next, in step S93, the retrieval unit 47 determines whether the number k of the retrieval keyword is smaller than the total number K of the retrieval keywords. In a case where the number k of the retrieval keyword is smaller than the total number K of the retrieval keywords, the retrieval unit 47 proceeds to step S94.

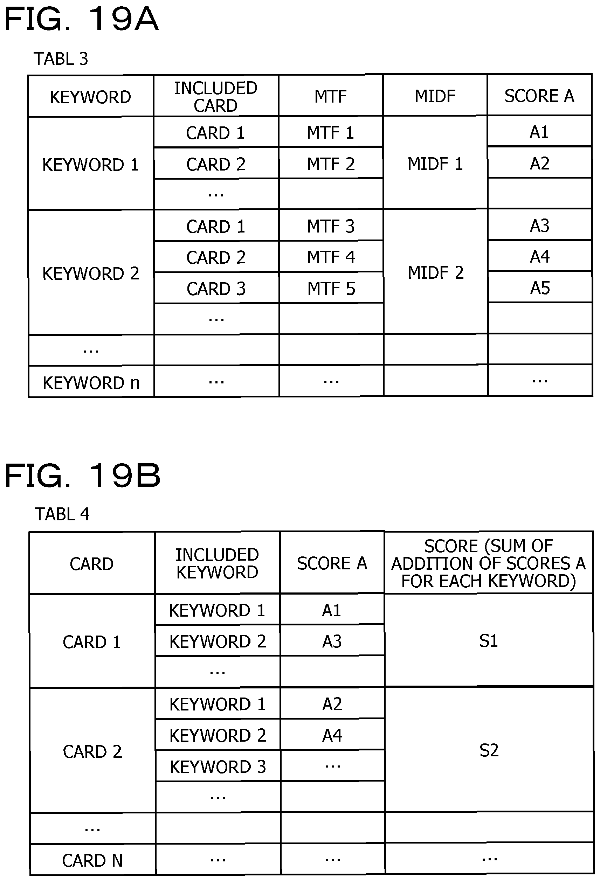

In step S94, the retrieval unit 47 obtains a retrieval keyword k. Next, in step S95, the retrieval unit 47 stores the retrieval keyword k that is a word to be retrieved in an item of the keyword of a card table (see FIG. 19A, referred to as a table 3) of the card 50 (candidate card) matching the retrieval condition. FIGs. 19A and 19B are diagrams illustrating an example of the retrieval result according to the second embodiment.

Next, in step S96, the retrieval unit 47 obtains a list of the cards including the retrieval keyword k from the dictionary table 415 (see FIG. 16). The length of this list is defined as M. For example, M is the total number of candidate cards. Next, in step S97, the retrieval unit 47 obtains the MIDF for a number m of the candidate card in the list and writes the MIDF to the item of the MIDF in the table 3. An initial value of m is 1.

Next, in step S98, the retrieval unit 47 obtains the MTF corresponding to the retrieval keyword (word) k and the number m of the card from the card data table 412 (see FIG. 12) and writes the obtained MTF in the item of the MTF of the table 3. Next, in step S99, the retrieval unit 47 adds one to the number m of the card, and, in step S100, whether the number m of the card is smaller than the length M of the list is determined. While the number m of the card is smaller than the length M of the list, the retrieval unit 47 repeats the process in steps S97 to S99, obtains the MIDF and the MTF for the number m of the candidate card, and writes the obtained MIDF and MTF in the item of the MIDF and the item of the MTF in the table 3.

In step S100, when the number m of the card is greater than or equal to the length M of the list, the process proceeds to step S101, and the retrieval unit 47 calculates the MIDF × MTF as a score A. Next, in step S102, the retrieval unit 47 adds one to the retrieval keyword k and returns to step S93. The process in steps S94 to S102 is repeated for all the retrieval keywords. As a result, the score of the card A in a case where the retrieval keyword is the word X, y, z ...

is calculated as follows.

$$Score(x, y, z, ...) = MIDF(x)*MTF(Z, x) + MIDF(y)*MTF(Z, y) + MIDF(z)*MTF(Z, z) + ...$$

In step S93, when the number k of the retrieval keyword is greater than or equal to the retrieval keyword, the retrieval unit 47 proceeds to step S103 and converts the table 3 of FIG. 19A into a format of a table 4 illustrated in FIG. 19B.

Next, in step S104, for each card, the retrieval unit 47 adds the score A on each keyword included in the card. Next, in step S105, the retrieval unit 47 sorts the cards in the table 4 in descending order of the scores, the notification unit 48 notifies the information processing terminal 1 of the sorted retrieval results, and then, the process returns to step S91 and waits until the next retrieval request is accepted.

As described above, with the method of retrieving data according to the embodiment, the scores are changed based on the level of importance of the words for which the level of importance of the cards and words are adjusted by using the MTF-MIDF method obtained by correcting the TF-IDF method. For example, in accordance with the extent of activity of discussion and the degree of importance of the words in a conference, the degree of relevance of the cards 50 to the retrieval condition is calculated and scored to determine the display order of the cards 50. Thus, the card 50 actively discussed in the conference may be displayed at an upper position. It may be said that there is a high possibility that the card 50 actively discussed in the conference is actively discussed again in a subsequent conference. Displaying such a card 50 at an upper level produces an effect that this card 50 may be quickly found.

[Hardware Configuration]

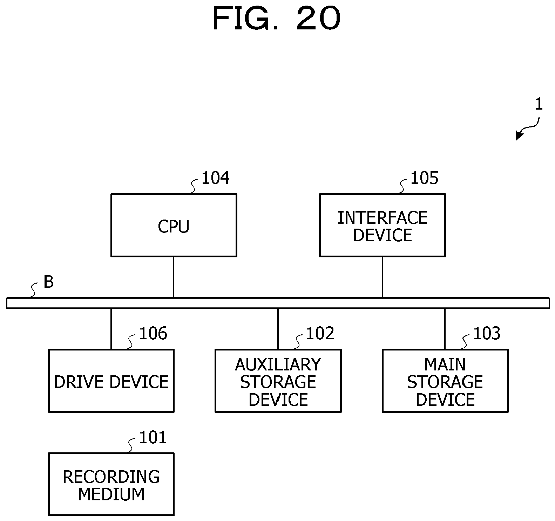

At last, a hardware configuration diagram illustrating an example of the information processing terminal 1 is described with reference to FIG. 20. Since the hardware configuration diagram of the information processing terminal 1 is similar to the hardware configuration diagram of the information processing terminal 1, description thereof is omitted.

The information processing terminal 1 includes a drive device 106, an auxiliary storage device 102, a main storage device 103, a central processing unit (CPU) 104, and an interface device 105. These devices and unit are coupled to each other via a bus B.

A program to be executed by the CPU 104 in the information processing terminal 1 may be provided by a recording medium 101. When the recording medium 101 in which the program is recorded is set in the drive device 106, the program is installed from the recording medium 101 to the auxiliary storage device 102 via the drive device 106. However, the program is not necessarily installed via the recording medium 101 and may be downloaded from a computer via the network 2. The auxiliary storage device 102 stores the installed program, files to be used, data, and the like.

The main storage device 103 reads the program from the auxiliary storage device 102 and stores the program in response to an instruction to start the program. By executing the program stored in the main storage device 103, the CPU104 executes each function of the information processing terminal 1. The interface device 105 is used as an interface for coupling to the network 2.

An output device such as a display that outputs a retrieval result or an input device such as a mouse or a keyboard for accepting input of a retrieval request from the user may be coupled to the information processing terminal 1.

Examples of the recording medium 101 include portable recording media such as a compact disc read-only memory (CD-ROM), a Digital Versatile Disc (DVD), and a Universal Serial Bus (USB) memory. Examples of the main storage device 103 include a random-access memory (RAM) and the like. Examples of the auxiliary storage device 102 include a hard disk drive (HDD), a solid-state drive (SSD), and the like.

As a storage unit 56, for example, the auxiliary storage device 102 or the main storage device 103 may be used, or an other storage device coupled to the information processing terminal 1 via the network 2 by using the interface device 105 may be used.

The program for executing each function of the card operation control unit 12, the display control unit 13, the attention degree calculation unit 14, and the retrieval request unit 15 is loaded from the auxiliary storage device 102 to the main storage device 103 and is executed by the CPU 104. Thus, the CPU 104 executes a method of generating grouping information. The storage unit 11 is realized by a series of storage areas in the main storage device 103 or the auxiliary storage device 102.

Although the method of retrieving data and a data retrieval program have been described with the above-described embodiments in the above description, the method of retrieving data or the data retrieval program according to the present disclosure is not limited to the above-described embodiments, and various modifications and improvements may be made within the scope of the present disclosure. In a case where a plurality of the above-described embodiments and modification examples are present, the embodiments and the modifications may be combined with each other as long as the embodiments and the modifications to be included in the combination are consistent with each other.

For example, referring to FIG. 10, although the calculation of the degree of attention of the word is executed by the information processing terminal 1, this calculation may be executed by the server 4. However, when the information processing terminal 1 executes the calculation of the degree of attention of the word and transmits the calculation result to the server 4, load on the server 4 may be reduced.

Of course, the configuration of the information processing system 100 illustrated in FIG. 1 is exemplary and not limiting the scope of the present disclosure. Accordingly, there are various system configuration examples depending on application or purposes. For example, a system form in which the information processing terminal 1 and the server 4 are coupled to each other via the network 2 is an embodiment of the information processing system 100 according to the present embodiment and is not limiting. For example, the number of the information processing terminals 1 and the number of servers 4 included in the information processing system 100 according to the present embodiment may be one, two, or more. When a plurality of servers 4 are installed, the method of retrieving data may be subjected to distributed processing among the plurality of servers 4. Depending on application or purposes, these processing functions may be selectively integrated in a single server 4 out of the plurality of servers 4.

The information processing terminal 1 is not necessarily a personal computer. The information processing terminal 1 may be applied to a wearable display device such as a tablet-type terminal, a smartphone, a personal digital assistant (PDA), a head mount display (HMD), or a face mount display (FMD). The server 4 is not limited to a personal computer. The server 4 may be a cloud computer or an edge computer.

The following clauses will be further disclosed in relation to the above description.

**Claims**

1. A method of retrieving data, wherein

   the method is executed by a server that causes a plurality of information processing terminals to display a shared screen in which a plurality of cards are arranged, wherein
   the method includes
   accepting a retrieval condition for the cards from a first information processing terminal,
   retrieving cards that match the retrieval condition,
   determining a display order of the cards that match the retrieval condition in accordance with a number of times of operation, and
   causing the first information processing terminal to display the cards that match the retrieval condition based on the determined display order.

2. The method according to claim 1, wherein

   the method further includes
   sorting, by using an MTF-MIDF method which is a corrected term frequency-inverse document frequency (TF-IDF) method, the display order of the cards that match the retrieval condition in accordance with the operation performed on a word included in the retrieval condition out of words included in the cards that match the retrieval condition, and
   causing the first information processing terminal to display the cards in the sorted display order.

3. The method according to claim 2, wherein
   the operation performed on the word included in the retrieval condition is a number of times of pointing operation performed on the word and a number of times of annotation operation performed on the word.

4. The method according to claim 2 or 3, wherein

   the method further includes
   sorting, by using the MTF-MIDF method which is the corrected term frequency-inverse document frequency (TF-IDF) method, the display order of the cards that match the retrieval condition in accordance with the operation performed on the cards that match the retrieval condition, and
   causing the first information processing terminal to display the cards in the sorted display order.

5. The method according to claim 4, wherein
   the operation performed on the cards that match the retrieval condition is a number of times of the operation performed on the cards and display positions of the cards.

6. A program causing a server that causes a plurality of information processing terminals to display a shared screen in which a plurality of cards are arranged to execute a processing of:

accepting a retrieval condition for the cards from a first information processing terminal,
retrieving cards that match the retrieval condition,
determining a display order of the cards that match the retrieval condition in accordance with a number of times of operation, and
causing the first information processing terminal to display the cards that match the retrieval condition based on the determined display order.

7. The program according to claim 6, wherein

the processing further includes
sorting, by using an MTF-MIDF method which is a corrected term frequency-inverse document frequency (TF-IDF) method, the display order of the cards that match the retrieval condition in accordance with the operation performed on a word included in the retrieval condition out of words included in the cards that match the retrieval condition, and
causing the first information processing terminal to display the cards in the sorted display order.

8. The program according to claim 7, wherein
the operation performed on the word included in the retrieval condition is a number of times of pointing operation performed on the word and a number of times of annotation operation performed on the word.

9. The program according to claim 6 or 7, wherein

the processing further includes
sorting, by using the MTF-MIDF method which is the corrected term frequency-inverse document frequency (TF-IDF) method, the display order of the cards that match the retrieval condition in accordance with the operation performed on the cards that match the retrieval condition, and
causing the first information processing terminal to display the cards in the sorted display order.

10. The program according to claim 9, wherein
the operation performed on the cards that match the retrieval condition is a number of times of the operation performed on the cards and display positions of the cards.

# FIG. 1

EP 4 216 078 A1

# FIG. 2

# FIG. 3

INFORMATION PROCESSING TERMINAL — 1

CARD OPERATION CONTROL UNIT — 12

CARD MANAGEMENT UNIT — 111

CARD OPERATION UNIT — 112

DISPLAY CONTROL UNIT — 13

ATTENTION DEGREE CALCULATION UNIT — 14

RETRIEVAL REQUEST UNIT — 15

STORAGE UNIT — 11

DICTIONARY TABLE — 124

CARD DATA TABLE — 121

CARD OPERATION TABLE — 122

POSITION/SIZE TABLE — 123

# FIG. 4

SERVER ⟋4

ACCEPTANCE UNIT ⟋42

MTF CALCULATION UNIT ⟋45

MIDF CALCULATION UNIT ⟋46

ANALYSIS UNIT ⟋43

RETRIEVAL UNIT ⟋47

ACTIVITY DEGREE CALCULATION UNIT ⟋44

NOTIFICATION UNIT ⟋48

STORAGE UNIT ⟋41

RETRIEVAL DATABASE ⟋411

CARD DATA TABLE ⟋412

CARD OPERATION TABLE ⟋413

POSITION/ SIZE TABLE ⟋414

DICTIONARY TABLE ⟋415

# FIG. 5

SERVER | INFORMATION PROCESSING TERMINAL

# FIG. 6

START

ACCEPT RETRIEVAL FROM INFORMATION PROCESSING TERMINAL — S101

OBTAIN RETRIEVAL CONDITION — S102

EXTRACT CARDS MATCHING RETRIEVAL CONDITION — S103

IDENTIFY NUMBERS OF TIMES OF OPERATION OF CARDS EXTRACTED FROM CARD DATA TABLE — S104

DETERMINE DISPLAY ORDER OF CARDS ACCORDING TO NUMBER OF TIMES OF OPERATION — S105

DISPLAY CARDS MATHCING RETRIEVAL CONDITION BASED ON DETERMINED DISPLAY ORDER — S106

## FIG. 7A

## FIG. 7B

# FIG. 8A

PT

X,

Y, Z, C

50

AT

# FIG. 8B

Ar1

Ar2

# FIG. 8C

| WORD | DEGREE OF ATTENTION |
|------|---------------------|
| X | BX |
| Y | BY |
| Z | BZ |
| C | BC |

# FIG. 9A

# FIG. 9B

$$p = x1*W + y1$$
$$q = x2*W + y2$$

MAP TO COORDINATE
SYSTEM ON THE RIGHT

W

(x1, y1)

50

H

(x2, y2)

60

$\omega_2$

p

$\omega_1$

q

W·H

W·H

EP 4 216 078 A1

# FIG. 10

SERVER | INFORMATION PROCESSING TERMINAL

**START**

WAIT FOR RECEPTION OF EVENT — S1

NEW EVENT RECEIVED? — S2
- NO
- YES

RECEIVED EVENT IS CARD MOVEMENT END EVENT? — S3
- NO
- YES

OBTAIN DISPLAY POSITION AND SIZE DATA OF CARD — S4

CALCULATE VALUE OF DEGREE OF ACTIVITY OF CARD — S5

UPDATE VALUE OF DEGREE OF ACTIVITY IN CARD DATA TABLE (ADD TO EXISTING VALUE) — S6

OPERATION EVENT IS POINTER MOVEMENT EVENT? — S11
- NO
- YES

OBTAIN POINTING POSITION — S12

OBTAIN DISPLAY POSITION INFORMATION OF WORD IN CARD — S13

OBTAIN POINTED WORD — S14

TIME ELAPSED FROM PREVIOUS UPDATE OF DEGREE OF ATTENTION OF WORD IN CARD DATA TABLE IS GREATER THAN OR EQUAL TO n SECONDS? — S15
- NO
- YES

INCREMENT VALUE OF DEGREE OF ATTENTION OF WORD IN CARD DATA TABLE — S16

OPERATION EVENT IS HANDWRITTEN ANNOTATION EVENT? — S17
- NO
- YES

OBTAIN ANNOTATION POSITION — S18

OBTAIN DISPLAY POSITION INFORMATION OF WORD IN CARD — S19

OBTAIN ANNOTATED WORD — S20

TIME ELAPSED FROM PREVIOUS UPDATE OF DEGREE OF ATTENTION OF WORD IN CARD DATA TABLE IS GREATER THAN OR EQUAL TO n SECONDS? — S21
- NO
- YES

INCREMENT VALUE OF DEGREE OF ATTENTION OF WORD IN CARD DATA TABLE — S22

EP 4 216 078 A1

# FIG. 11

| CARD ID | SIZE | DISPLAY POSITION |
|---------|------|------------------|
| CARD 1 | W1/H1 | (x1, y1) |
| | | (x2, y2) |
| | | |
| CARD 2 | W2/H2 | ⋮ |

# FIG. 12

| CARD ID | DEGREE OF ACTIVITY | INCLUDED WORD | DEGREE OF ATTENTION | MTF | IAS |
|---|---|---|---|---|---|
| CARD 1 | A1 | WORD 1 | B1 | MTF1 | IAS1 |
| | | WORD 2 | B2 | MTF2 | |
| | | WORD 3 | B3 | MTF3 | |
| | | … | | | |
| CARD 2 | A2 | WORD 1 | B4 | MTF4 | |
| | | WORD 2 | B5 | MTF5 | |
| | | WORD 3 | B6 | MTF6 | |
| | | … | | | |
| … | | | | | |
| CARD n | … | … | … | … | |

# FIG. 13A

```
                        ┌─────────┐
                        │  START  │
                        └─────────┘
                             │
                             ▼
          ┌─────────────────────────────────────┐
          │ SET PREVIOUS PROCESS COMPLETION      │ ～S31
          │ TIME t1 TO 0                         │
          └─────────────────────────────────────┘
                             │
                             ▼
          ┌─────────────────────────────────────┐
          │ OBTAIN CURRENT TIME POINT t0         │ ～S32
          └─────────────────────────────────────┘
                             │
                             ▼
                          ╱  ╲  S33
                        ╱  CERTAIN ╲       NO
                      ╱ PERIOD OF TIME ╲ ─────────┐
                        ╲ ELAPSED      ╱
                         ╲ FROM t1?  ╱
                            ╲  ╱
                           YES│
                             ▼
          ┌─────────────────────────────────────┐
          │ SET IAS VALUE TO 0 (IAS = 0)        │ ～S34
          └─────────────────────────────────────┘
                             │
                             ▼
          ┌─────────────────────────────────────┐
          │ SET CARD NUMBER j FOR PROCESSING     │ ～S35
          │ TO 1                                 │
          └─────────────────────────────────────┘
                             │
                             ▼                      (B)
  S37                      ╱  ╲  S36
┌──────────────────┐  NO ╱      ╲
│ OBTAIN CURRENT   │ ◄──╱  j<J?  ╲
│ TIME AND         │     ╲      ╱
│ SUBSTITUTE       │      ╲    ╱
│ CURRENT TIME     │        ╲╱
│ FOR t1           │       YES│
└──────────────────┘         ▼
          ┌─────────────────────────────────────┐
          │ CALCULATE INVERSE OF DEGREE OF       │ ～S41
          │ ACTIVITY OF jTH CARD (aⱼ)            │
          └─────────────────────────────────────┘
                             │
                             ▼
          ┌─────────────────────────────────────┐
          │ ADD VALUE OF aⱼ TO VALUE OF IAS      │ ～S42
          │ (IAS = IAS + aⱼ)                     │
          └─────────────────────────────────────┘
                             │
                             ▼
          ┌─────────────────────────────────────┐
          │ WRITE VALUE OF IAS TO CARD DATA      │ ～S43
          │ TABLE                                │
          └─────────────────────────────────────┘
                             │
                             ▼
                           (A)
```

Step S41: CALCULATE INVERSE OF DEGREE OF ACTIVITY OF jTH CARD ($a_j$) — S41

Step S42: ADD VALUE OF $a_j$ TO VALUE OF IAS (IAS = IAS + $a_j$) — S42

# FIG. 13B

Ⓐ

SET WORD WEIGHTED APPEARANCE FREQUENCY (b) TO 0 — S51

↓

SET NUMBER i OF WORD FOR PROCESSING TO 1 — S52

↓

i>I? — S53 — YES →

NO

↓

OBTAIN DEGREE OF ATTENTION ($c_i$) OF iTH WORD — S54

↓

ADD $c_j$ TO WORD WEIGHTED APPEARANCE FREQUENCY (b) (b = b + $c_j$)) — S55

↓

INCREMENT i BY ONE — S56

SET NUMBER k OF WORD FOR PROCESSING TO 1 — S61

↓

k>K? — S62 — YES →

NO

↓

OBTAIN DEGREE OF ATTENTION ($c_k$) OF kTH WORD — S63

↓

CALCULATE MTF OF WORD k ($MTF_k = c_k/b$) — S64

↓

WRITE MTF OF WORD k ($MTF_k$) TO CARD DATA TABLE — S65

↓

INCREMENT k BY ONE — S66

↓

INCREMENT j BY ONE — S67

→ Ⓑ

# FIG. 14A

CARD 1

CARD 2

X, Y, Z, C

=

A, B, X, C

SCORE: 0.045

SCORE: 0.045

# FIG. 14B

CARD 1

CARD 2

X, Y, Z, C

⟩

A, B, X, C

SCORE: 0.11

SCORE: 0.03

POINTING TO
X EXISTS

POINTING DOES
NOT EXISTS

RETRIEVE WITH
WORD X

# FIG. 14C

CARD 1

CARD 2

X, Y, Z, C

⟨

A, B, X, C

SCORE: 0.31

SCORE: 0.625

SUBSTANTIALLY
EVEN POINTING

POINTING TO X IN A
PINPOINT MANNER

# FIG. 15

START

SET PREVIOUS PROCESS COMPLETION TIME t1 TO 0 — S71

OBTAIN CURRENT TIME POINT t0 — S72

CERTAIN PERIOD OF TIME ELAPSED FROM t1? — S73

NO

YES

SET NUMBER j OF WORD FOR PROCESSING TO 1 — S74

OBTAIN CURRENT TIME AND SUBSTITUTE CURRENT TIME FOR t1 — S85

NO

j<J? — S75

YES

SET NUMBER i OF CARD FOR PROCESSING TO 1 — S76

SET SUM OF INVERSES OF DEGREE OF ACTIVITY TO d (INITIAL VALUE d = 0) — S77

i<I? — S78

NO

YES

CALCULATE INVERSE di OF DEGREE OF ACTIVITY OF CARD i — S79

ADD SUM OF INVERSES OF DEGREE OF ACTIVITY (d = d + di) — S80

INCREMENT i BY ONE — S81

CALCULATE MIDF — S82

UPDATE MIDF OF WORD j IN DICTIONARY TABLE — S83

INCREMENT j BY ONE — S84

# FIG. 16

| WORD | INCLUDED CARD | MIDF |
|---|---|---|
| WORD 1 | CARD 1 | MIDF1 |
| | CARD 2 | MIDF2 |
| | ... | ... |
| WORD 2 | CARD 1 | MIDF3 |
| | CARD 2 | MIDF4 |
| | CARD 3 | MIDF5 |
| | ... | ... |
| ... | ... | ... |
| WORD n | ... | ... |

# FIG. 17A

# FIG. 17B

X, Y, Z, C

CARD 1

A, B, X, C, C

CARD 2

X, S, T

CARD 3

T,C

CARD 4

# FIG. 17C

RETRIEVE WITH
WORDS X AND C

X, Y, Z, C

SCORE: 0.06

< 

A, B, X, C, C

SCORE: 0.072

# FIG. 17D

X, Y, Z, C

SCORE: 0.22

>

A, B, X, C, C

SCORE: 0.11

# FIG. 18

```
                    ( START )
                        │
                        ▼
        ┌──────────────────────────────┐
        │  ACCEPT RETRIEVAL FROM       │
        │  INFORMATION PROCESSING      │── S91
        │  TERMINAL                    │
        └──────────────────────────────┘
                        │
                        ▼
        ┌──────────────────────────────┐
        │  SET NUMBER k OF RETRIEVAL   │── S92
        │  KEYWORD FOR PROCESSING TO 0 │
        └──────────────────────────────┘
                        │
                        ▼
                     S93
              ◇ k<K? ◇ ──NO──┐
                        │     │
                       YES    ▼
                     S94    S103
        ┌──────────────────┐  ┌──────────────────────┐
        │ OBTAIN RETRIEVAL │  │ CONVERT TABLE 3 INTO │
        │ KEYWORD k        │  │ FORMAT OF TABLE 4    │
        └──────────────────┘  └──────────────────────┘
```

**S91** ACCEPT RETRIEVAL FROM INFORMATION PROCESSING TERMINAL

**S92** SET NUMBER k OF RETRIEVAL KEYWORD FOR PROCESSING TO 0

**S93** k<K?

**S94** OBTAIN RETRIEVAL KEYWORD k

**S95** INSERT KEYWORD k INTO CARD TABLE (TABLE 3) OF CANDIDATE CARD

**S96** OBTAIN CARD LIST INCLUDING RETRIEVAL KEYWORD k FROM DICTIONARY TABLE AND SET LIST LENGTH TO M

**S97** OBTAIN MIDF OF CARD m AND WRITE MIDF OF CARD m TO TABLE 3

**S98** OBTAIN MTF CORRESPONDING TO KEYWORD k AND CARD m AND WRITE MTF TO TABLE 3

**S99** INCREMENT m BY ONE

**S100** m<M?

**S101** CALCULATE SCORE A (= MIDF*MTF)

**S102** INCREMENT k BY ONE

**S103** CONVERT TABLE 3 INTO FORMAT OF TABLE 4

**S104** FOR EACH CARD, ADD SCORE A FOR EACH KEYWORD INCLUDED IN THE CARD

**S105** SORT CARDS IN TABLE 4 IN DESCENDING ORDER OF SCORE

**S106** RETURN RETRIEVAL RESULT TO INFORMATION PROCESSING TERMINAL

# FIG. 19A

TABL 3

| KEYWORD | INCLUDED CARD | MTF | MIDF | SCORE A |
|---|---|---|---|---|
| KEYWORD 1 | CARD 1 | MTF 1 | MIDF 1 | A1 |
| | CARD 2 | MTF 2 | | A2 |
| | ... | | | |
| KEYWORD 2 | CARD 1 | MTF 3 | MIDF 2 | A3 |
| | CARD 2 | MTF 4 | | A4 |
| | CARD 3 | MTF 5 | | A5 |
| | ... | | | |
| ... | | | | |
| KEYWORD n | ... | ... | | ... |

# FIG. 19B

TABL 4

| CARD | INCLUDED KEYWORD | SCORE A | SCORE (SUM OF ADDITION OF SCORES A FOR EACH KEYWORD) |
|---|---|---|---|
| CARD 1 | KEYWORD 1 | A1 | S1 |
| | KEYWORD 2 | A3 | |
| | ... | | |
| CARD 2 | KEYWORD 1 | A2 | S2 |
| | KEYWORD 2 | A4 | |
| | KEYWORD 3 | ... | |
| | ... | | |
| ... | | | |
| CARD N | ... | ... | ... |

# FIG. 20

1

104
CPU

105
INTERFACE DEVICE

B

106
DRIVE DEVICE

102
AUXILIARY STORAGE DEVICE

103
MAIN STORAGE DEVICE

101
RECORDING MEDIUM

Europäisches
Patentamt

European
Patent Office

Office européen
des brevets

# EUROPEAN SEARCH REPORT

Application Number

**EP 22 20 1063**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 625 716 A (JUHAOKAN TECH CO LTD) 4 September 2020 (2020-09-04) * figures 1,6,9,11 * | 1-10 | INV. G06F16/93 G06F16/33 |
| X | CN 111 897 918 A (UNIV YANGZHOU) 6 November 2020 (2020-11-06) * claims 1,2 * | 1-10 | |
| X | US 11 153 532 B1 (GUPTA VISHESH [IN] ET AL) 19 October 2021 (2021-10-19) * column 18 - column 19; figure 4 * * column 4 - column 5 * | 1-10 | |
| X | WO 2021/085085 A1 (HITACHI LTD [JP]) 6 May 2021 (2021-05-06) * abstract * & US 2022/327445 A1 (FURUYA SHUHEI [JP] ET AL) 13 October 2022 (2022-10-13) * paragraph [0149] - paragraph [0158]; figures 13,14 * * paragraph [0105] - paragraph [0115]; figure 9 * | 1-10 | |

TECHNICAL FIELDS
SEARCHED      (IPC)

G06F

The present search report has been drawn up for all claims

| Place of search | Date of completion of the search | Examiner |
|---|---|---|
| Munich | 31 May 2023 | Frank, Korbinian |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

..................................................................................

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 22 20 1063

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2023

| Patent document cited in search report | | Publication date | Patent family member(s) | | Publication date |
|---|---|---|---|---|---|
| CN 111625716 | A | 04-09-2020 | NONE | | |
| CN 111897918 | A | 06-11-2020 | NONE | | |
| US 11153532 | B1 | 19-10-2021 | EP | 4024823 A1 | 06-07-2022 |
| | | | US | 11153532 B1 | 19-10-2021 |
| | | | US | 2022210372 A1 | 30-06-2022 |
| WO 2021085085 | A1 | 06-05-2021 | CN | 114341900 A | 12-04-2022 |
| | | | GB | 2603318 A | 03-08-2022 |
| | | | JP | 7282014 B2 | 26-05-2023 |
| | | | JP | 2021072035 A | 06-05-2021 |
| | | | US | 2022327445 A1 | 13-10-2022 |
| | | | WO | 2021085085 A1 | 06-05-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004206631 A

- JP 2004062893 A